# EUROPEAN PATENT SPECIFICATION

(11) **EP 0 984 186 B1**
(45) Date of publication and mention of the grant of the patent: **07.06.2006**
(21) Application number: 99109849.2
(22) Date of filing: 19.05.1999
(51) Int. Cl.: F16D 48/06

(54) **Apparatus for controlling vehicle drive system having automatic clutch between drive power source and transmission**
Steuerungsvorrichtung eines Antriebsstrangs mit automatisch gesteuerter Fahrkupplung
Appareil de commande d'une chaine de transmission pour véhicules avec un embrayage automatique

(30) Priority: 01.09.1998 JP 24702598; 04.12.1998 JP 34533398
(43) Date of publication of application: 08.03.2000
(73) Proprietor: Toyota Jidosha Kabushiki Kaisha, Toyota-shi, Aichi-ken 471-8571 (JP)
(72) Inventor: Yano, Masaya c/o Toyota Jidosha Kabushiki Kaisha, Toyota-shi, Aichi-ken, 471-8571 (JP); Okuwaki, Shigeru c/o Toyota Jidosha Kabushiki K., Toyota-shi, Aichi-ken, 471-8571 (JP); Aoto, Akira c/o Toyota Jidosha Kabushiki Kaisha, Toyota-shi, Aichi-ken, 471-8571 (JP); Takeuchi, Shinichi c/o Toyota Jidosha Kabushiki K., Toyota-shi, Aichi-ken, 471-8571 (JP); Maeda, Yasuhiro c/o Toyota Jidosha Kabushiki K., Toyota-shi, Aichi-ken, 471-8571 (JP)
(74) Representative: TBK-Patent

(56) References cited:
- EP-A- 0 474 107
- WO-A-94/05933
- DE-A- 4 013 299
- DE-A- 19 637 001
- DE-A- 19 719 614
- DE-A- 19 731 842
- US-A- 4 708 032
- US-A- 5 056 632
- US-A- 5 267 157
- US-A- 5 741 202
- PATENT ABSTRACTS OF JAPAN vol. 010, no. 132 (P-456), 16 May 1986 (1986-05-16) & JP 60 254213 A (AISHIN WARNER KK), 14 December 1985 (1985-12-14)

## Description

### BACKGROUND OF THE INVENTION

### Field of the Invention

The present invention relates in general to a vehicle drive control apparatus, and more particularly to techniques for detecting a shifting action of a transmission of an automotive vehicle.

### Discussion of the Prior Art

There has been proposed an automotive vehicle equipped with a drive system including (a) a transmission disposed between a drive power source and drive wheels, having a plurality of forward drive positions with respective different speed ratios, and mechanically operable to be selectively placed in one of the forward drive positions, according to an operation of a manually operable shift lever, (b) an automatic clutch disposed between the transmission and the drive power source and operable between a fully engaged position and a fully released position thereof, and (c) clutch control means for controlling the automatic clutch such that the automatic clutch is fully released upon shifting of the transmission, and is engaged after the shifting is completed. For controlling the automatic clutch to be suitably released and engaged and controlling the drive power source such as an engine, it is necessary to know a currently selected drive position to which the transmission is being shifted, or a currently established drive position of the transmission. To this end, a plurality of sensors are provided for the plurality of forward drive positions, respectively. JP-U-60-25528 discloses an example of such a vehicle drive system wherein the sensors are provided for the respective forward drive positions of the transmission.

However, the provision of the plurality of sensors for the respective forward drive positions of the transmission will inevitably increase the cost of manufacture of a vehicle drive control apparatus for controlling the vehicle drive system. To solve this drawback, it is considered to obtain a speed ratio of the transmission, namely, a ratio of the rotating speed of an input member of the transmission to the rotating speed of an output member of the transmission, and estimate the currently established drive position of the transmission. For instance, the speed ratio of the transmission can be obtained on the basis of the rotating speed of the engine and the running speed of the vehicle. However, this method does not permit correct or accurate estimation of the currently established drive position of the transmission when the vehicle is in a stop. For instance, the method may cause erroneous determination that the transmission is placed in a low-sped drive position (e.g., first-speed position) when it is in fact placed in a high-speed drive position (e.g., fourth-speed position). In this event, the vehicle is started with the automatic clutch being engaged even through the transmission is in the high-speed drive position.

The transmission may use synchro-mesh coupling clutches for shifting the transmission. In this case, the currently established drive position of the transmission cannot be accurately estimated on the basis of the speed ratio of the rotating speeds of the input and output members of the transmission, since the full engagement of the spline teeth of input and output members of the synchro-mesh coupling clutch is delayed. This delay may cause erroneous determination of completion of a shifting action of the transmission to a given drive position even before the spline teeth have not been fully engaged, resulting in full engagement of the synchro-mesh coupling clutch in this condition, which causes undesirable generation of gearing noise of the synchro-mesh coupling clutch.

Document DE 197 31 842 A1 describes an apparatus according to the preamble of claims 1 and 11, and a method for monitoring the functions of a vehicle transmission and a vehicle for applying the latter method. In more concrete terms, an apparatus for controlling a drive system of an automotive vehicle is described, including a drive power source, a drive wheel and a transmission which is disposed between the drive power source and the drive wheel. The apparatus detects the position a transmission element which is variable in its position and monitors by means of a monitoring device if the transmission element has engaged to its predetermined target position.

### SUMMARY OF THE INVENTION

It is an object of the present invention to minimize the number of sensors used for controlling an automatic clutch provided in a vehicle drive system including a transmission. This object is achieved by an apparatus according to claim 1 and 11. Further advantageous formations of the present are subject-matter of the dependent claims.

According to a first aspect of this invention, an apparatus for controlling a drive system of an automotive vehicle is provided, including (a) a drive power source, (b) a drive wheel, (c) a shift lever operable by an operator of the vehicle, (d) a transmission disposed between the drive power source and the drive wheel and having an input member and an output member, and (e) an automatic clutch disposed between the transmission and the drive power source and having an engaged position for connecting the drive power source and the transmission to each other to transmit a power from the drive power source to the transmission and a released position for disconnecting the drive power source and the transmission from each other, the transmission having a plurality of forward drive positions whose speed ratio values are different from each other, and being mechanically operable to selectively establish one of the plurality of forward drive positions according to an operation of the shift lever, the plurality of forward drive positions including a low-speed drive position suitable for starting the vehicle, the apparatus being characterised by comprising: (f) a low-speed drive position detecting device for detecting that the low-speed drive position of the transmission is currently selected; and (g) a selected drive position determining device for determining a currently selected one of the plurality of forward drive positions of the transmission, on the basis of a ratio of a rotating speed of the input member to that of the output member.

In the vehicle drive control apparatus constructed according to the first aspect of this invention, the currently established drive position of the transmission is estimated or determined by the selected drive position determining device, based on the speed ratio of the rotating speeds of the input and output members of the transmission. Further, the low-speed drive position of the transmission suitable for starting the vehicle is detected by the low-speed drive position detecting device even while the vehicle is in a stop. Thus, the present vehicle drive control apparatus permits suitable engagement control of the automatic clutch using the low-speed drive position detecting device using a single detector switch, and therefore assures improved life expectancy of the automatic clutch. Accordingly, the number of the sensors or switches necessary to detect the currently selected drive position of the transmission and control the automatic clutch is reduced, leading to a reduced cost of manufacture of the vehicle drive control apparatus.

As the automatic clutch, a friction type clutch or an electromagnetic type clutch is preferably used. If necessary, the automatic clutch may be controlled so as to control an amount of slip of its input and output members. In other words, the automatic clutch may be operated in a partially engaging manner.

The plurality of forward drive positions of the transmission may include only one low-speed drive position, or a plurality of low-speed drive positions, for example, a first-speed drive position having the highest speed ratio, and a second-speed drive position having the second highest speed ratio. In the latter case, the low-speed drive position detecting device is adapted to detect that either one of the plurality of low-speed drive positions is currently selected. To avoid an excessive load which would act on the automatic transmission if the vehicle is started without the transmission being placed in the low-speed drive position, the present vehicle drive control apparatus may further comprise various means, for instance, an alarm buzzer or other audio alarming device, or any visual or other alarming device, which is activated if the low-speed drive position is not selected during starting of the vehicle, for informing the vehicle operator that the vehicle is being started without the transmission being placed in the low-speed drive position. Alternatively, the vehicle drive control apparatus may comprise a clutch control device which is operated if the low-speed drive position is not selected during starting of the vehicle, so that the automatic clutch is suitably controlled by the clutch control device with the transmission placed in a high-speed drive position rather than the low-speed drive position, so as to avoid an excessive load acting on the automatic clutch during starting of the vehicle with the transmission placed in the high-speed drive position. The vehicle drive control apparatus may comprise a clutch engagement inhibiting device for inhibiting the automatic clutch from being engaged if the vehicle is started without the transmission being placed in the low-speed drive position.

The rotating speeds of the input and output members of the transmission used by the selected drive position determining device may be represented by other members of the vehicle drive system. For instance, the rotating speed of the input member of the transmission may be represented by the rotating speed of the drive power source in the form of an engine, for example, when the automatic clutch is in the engaged state, and the rotating speed of the output member of the transmission may be represented by the vehicle running speed, more precisely, calculated from the vehicle running speed.

According to one preferred form of the apparatus according to the first aspect of the invention, the transmission includes: two parallel shafts serving as the input and output members, respectively; a plurality of shift gear sets whose gear ratio values are different from each other and each of which consists of two gears respectively mounted on the two parallel shafts; a plurality of coupling clutches provided for the plurality of shift gear sets, respectively, and including respective clutch hub sleeves; and a plurality of fork members engaging the clutch hub sleeves, and selectively moved mechanically according to a movement of the shift lever to move the clutch hub sleeves to selectively establish the plurality of forward drive positions of the transmission, and wherein the low-speed drive position detecting device includes a single ON-OFF detector switch which is turned on and off according to a movement of one of the plurality of fork members which corresponds to the low-speed drive position.

For instance, the fork members include a first fork member which is linearly moved selectively in one of opposite longitudinal directions thereof to one of two shift positions, to selectively establish one of a first-speed drive position and a second-speed drive position each provided as the low-speed drive position of the transmission. The ON-OFF detector switch of the low-speed drive position detecting device may be positioned relative to this fork member such that the detector switch is placed in one of ON and OFF states when the fork member is located between the two shift positions, and is placed in the other of the ON and OFF states when the fork member is moved to one of the two shift positions.

In one advantageous arrangement of the above preferred form of the first aspect of this invention, the vehicle drive control apparatus further comprises a shifting completion determining device for determining that a shifting action of the transmission to any one of the plurality of forward drive positions is completed. In this case, the ON-OFF detector switch is preferably adapted to detect the selection of the low-speed drive position before the shifting completion determining device determines the completion of the shifting action, that is, before the automatic transmission is engaged immediately after the completion of the shifting action. In other words, the low-speed drive position detecting device is preferably adapted to detect the selection of the low-speed drive position before the transmission has been completely shifted to the low-speed drive position, that is, to detect a process of a shifting action of the transmission to the low-speed drive position.

The ON-OFF detector switch used in the low-speed drive position detecting device may preferably be a contact type switch such as an ON-OFF limit switch which is turned on upon engagement with the fork member and turned off upon disengagement from the fork member, or vice versa. However, the ON-OFF detector switch may be a proximity switch, a photoelectric switch or any other non-contact type switch.

According to a second aspect of the present invention, an apparatus for controlling a drive system of an automotive vehicle is provided including a drive power source, a drive wheel, and a transmission disposed between the drive power source and the drive wheel and having a plurality of drive positions, the apparatus being characterised by comprising a shifting completion determining device for determining that a shifting action of transmission to any one of the plurality of drive positions is completed.

The vehicle drive control apparatus according to the second aspect of this invention uses the shifting completion determining device using a single detector for determining that the transmission has been shifted to any one of a plurality of drive positions, so that the engagement control of the automatic clutch or the control of the drive power source (e.g., engine) are effected with high accuracy after completion of a shifting action of the transmission to any one of those drive positions. The present vehicle drive control apparatus is available at a lower cost than a vehicle drive control apparatus wherein a plurality of detectors or sensors are used to detect that the transmission has been shifted to respective drive positions.

The drive positions of the transmission controlled by the apparatus according to the second aspect of the invention described above may include at least one reverse drive position as well as at least one forward drive position, for instance, one reverse drive position and a plurality of forward drive positions. The transmission may be mechanically shifted according to an operation of a shift lever manipulated by the vehicle operator, or may be automatically shifted by a suitable actuator to one of the drive positions which is automatically selected according to predetermined shifting patterns represented by data maps stored in a memory. Alternatively, the transmission may be shifted according to an output signal or signals generated from at least one operator-controlled member such as a switch, which signals represent an operator's desire relating to a shifting action of the transmission. It is also noted that the drive control system including the present drive control apparatus need not include an automatic clutch, and may include a fluid coupling such as a torque converter in place of an automatic clutch.

The shifting completion determining device permits an automatic clutch or any other coupling device to be brought to its engaged position or torque transmitting position only after a shifting action of the transmission is completed, so that the transmission is held in the selected drive position even if a large torque is applied to the transmission through such a coupling device disposed between the drive power source and the transmission.

Where such an automatic clutch is provided, it is disposed between the transmission and the drive power source. The automatic clutch has an engaged position for connecting the drive power source and the transmission to each other to transmit a power from the drive power source to the transmission, and a released position for disconnecting the drive power source and the transmission from each other. In this case, the vehicle drive control apparatus includes a transmission-shifting clutch control device for placing the automatic clutch in the released position during the shifting action of the transmission, and for placing the automatic clutch in the engaged position after the shifting completion determining device determines that the shifting action is completed.

In one preferred form of the vehicle drive control apparatus according to the second aspect of this invention, the transmission includes: two parallel shaft; a plurality of shift gear sets whose gear ratio values are different from each other and each of which consists of two gears respectively mounted on the two parallel shafts; a plurality of coupling clutches provided for the plurality of shift gear sets, respectively, and including respective clutch hub sleeves; a plurality of fork members engaging the clutch hub sleeves, and selectively movable to move the clutch hub sleeves to selectively establish the plurality of drive positions of the transmission; and a drive position selecting member which is mechanically moved in a position-selecting direction according to a movement of an operator-controlled shift lever in a first direction, for engagement of the drive position selecting member with a selected one of the plurality fork members, the drive position selecting member being mechanically moved in a shifting direction substantially perpendicular to the position-selecting direction, according to a movement of the shift lever in a second direction different from the first direction, so that the selected one of the plurality of fork members is moved to move a corresponding one of the clutch hub sleeves for establishing a corresponding one of the plurality of drive positions of the transmission, and wherein the shifting completion determining device includes an ON-OFF detector switch whose operating state is switched between an ON state and an OFF state when the drive position selecting member has been moved in the shifting direction to a position at which one of the coupling clutches that corresponds to the selected one of the plurality of fork members has been fully engaged, irrespective of a position of the drive position selecting member in the position-selecting direction.

In the above preferred form of the apparatus, the operating state of the ON-OFF detector switch of the shifting completion determining device is switched between its ON and OFF states when the drive position selecting member has been moved in the shifting direction to a position at which the coupling clutch corresponding to the fork member moved by the drive position selecting member has been fully engaged. This arrangement permits accurate detection that the transmission has been completely brought to a selected one of the drive positions.

The ON-OFF detector switch of the shifting completion determining device may be positioned relative to the drive position selecting member such that the detector switch is placed in one of ON and OFF states when the drive position selecting member is located between the two shift positions, and is placed in the other of the ON and OFF states when the drive position selecting member is moved to one of the two shift positions.

In one advantageous arrangement of the above preferred form of the apparatus according to the second aspect of the invention, the drive position selecting member is a drive position selector shaft which is linearly moved in an axial direction thereof as the above-indicated position-selecting direction and which is rotated about an axis thereof, a rotary movement of the drive position selector shaft being a movement of the drive position selecting member in the above-indicated shifting direction.

The drive position selecting member may be operatively connected to the shift lever through a suitable link mechanism. The link mechanism may include a gear mechanism, or a combination of a first push-pull cable for moving the selecting member in the position-selecting direction and a second push-pull cable for moving the selecting member in the shifting direction. The link mechanism may use a hydraulic actuator.

According to a third aspect of this invention, additionally to the aforementioned apparatus, a shifting completion determining device for determining completion of a shifting action of a transmission to any one of plurality of drive positions is provided, the transmission including (a) two parallel shafts, (b) a plurality of shift gear sets whose gear ratio values are different from each other and each of which consists of two gears respectively mounted on the two parallel shafts, (c) a plurality of coupling clutches provided for the plurality of shift gear sets, respectively, and including respective clutch hub sleeves, (d) a plurality of fork members engaging the clutch hub sleeves, and selectively movable to move the clutch hub sleeves to selectively establish the plurality of drive positions of the transmission, and (e) a drive position selecting member which is mechanically moved in a position-selecting direction according to a movement of an operator-controlled shift lever in a first direction, for engagement of the drive position selecting member with a selected one of the plurality fork members, the drive position selecting member being mechanically moved in a shifting direction substantially perpendicular to the position-selecting direction, according to a movement of the shift lever in a second direction different from the first direction, so that the selected one of the plurality of fork members is moved to move a corresponding one of the clutch hub sleeves for establishing a corresponding one of the plurality of drive positions of the transmission, the shifting completion determining device being characterised by comprising: an ON-OFF detector switch whose operating state is switched between an ON state and an OFF state when the drive position selecting member has been moved in the shifting direction to a position at which one of the coupling clutches that corresponds to the selected one of the plurality of fork members has been fully engaged, irrespective of a position of the drive position selecting member in the position-selecting direction.

The shifting completion determining device constructed as described above according to the third aspect of this invention has substantially the same advantages as described above with respect to the vehicle drive control apparatus according to the second aspect of the invention.

In one preferred form of the shifting completion determining device according to the third aspect of this invention, the shifting completion determining device further includes a clutch control device operable in response to an output signal of the ON-OFF detector switch, for determining whether the above-indicated one of the coupling clutches that corresponds to the selected one of the plurality of fork members has been fully engaged.

According to a fourth aspect of this invention, an apparatus for controlling a drive system of an automotive vehicle is provided including (a) a drive power source, (b) a drive wheel, (c) a shift lever operable by an operator of the vehicle, (d) a transmission disposed between the drive power source and the drive wheel, and (e) an automatic clutch disposed between the transmission and the drive power source and having an engaged position for connecting the drive power source and the transmission to each other to transmit a power from the drive power source to the transmission and a released position for disconnecting the drive power source and the transmission from each other, the transmission having a plurality of forward drive positions whose speed ratio values are different from each other, and being mechanically operable to selectively establish one of the plurality of forward drive positions according to an operation of the shift lever, the plurality of forward drive positions including a plurality of low-speed drive positions suitable for starting the vehicle, the plurality of low-speed drive positions being selectively established by respective movements of the shift lever in respective different directions, the apparatus being characterised by comprising: a low-speed drive position detecting device for detecting that one of the plurality of low-speed drive positions of the transmission is currently selected, the low-speed drive position detecting device including (i) a load sensor for detecting a direction in which an operating force acts on the shift lever, and (b) low-speed drive position determining means operable in response to an output signal of the load sensor, for determining which one of the plurality of low-speed drive positions is currently selected, on the basis the direction represented by the output signal of the load sensor.

In the vehicle drive control apparatus constructed as described above according to the fourth aspect of this invention, the low-speed drive position determining device determines which one of the plurality of low-speed drive positions of the transmission is currently selected, on the basis of the direction in which the operating force acts on the shift lever. This direction is detected by the load sensor of the determining device. The accuracy of determination by the present low-speed drive position determining device is higher than that by a selected drive position determining device which is adapted to determine a currently selected one of the drive positions of the transmission on the basis of a ratio of the rotating speeds of the input and output members of the transmission. Where the currently detected drive position is determined on the basis of the speed ratio of the transmission, sensors for detecting the rotating speeds of the input and output members of the transmission tend to have relatively large detection errors when the vehicle running speed is relatively low. Accordingly, the speed ratio cannot be obtained with sufficient accuracy at the relatively low vehicle running speed. Therefore, the determination as to whether one of the low-speed drive positions is currently selected is difficult to be achieved with high accuracy, since these low-speed drive positions are usually used at the relatively low vehicle running speed.

It is also noted that the currently selected one of the low-speed drive positions of the transmission is determined, by detecting the direction in which an operating force acts on the shift lever, by using the load sensor. This arrangement assures a smaller amount of increase in the sliding resistance during a shifting action of the transmission, than in an arrangement wherein a plurality of ON-OFF detector switches are used for the two or more low-speed drive positions, respectively. Accordingly, the above arrangement permits smooth operations of the transmission without deteriorated feel of operation of the shift lever due to the increased sliding resistance.

The apparatus according to the fourth aspect of the invention may further comprise a shifting completion determining device for determining that a shifting action of the transmission to any one of the plurality of drive positions is completed.

The plurality of low-speed drive positions of the transmission may consist of two low-speed drive positions which are established by respective movements of the shift lever in respective different directions along a straight line. For instance, the low-speed drive positions consist of a first-speed drive position and a second-speed drive position which are selected and established by respective linear movements of the shift lever in the respective opposite directions along a straight line. In this case, the load sensor may be arranged to detect only one of the two opposite directions. However, it is desirable that the load sensor includes two load sensing switches for detecting the two mutually opposite directions in which the operating force act on the shift lever. While the load sensor is required to detect the direction in which the operating force acts on the shift lever, it need not be capable of detecting the value of the operating force. For instance, the load sensor may consist of at least one ON-OFF detector switch whose operating state is switches between an ON state and an OFF state when the operating force acting on the shift lever in a given direction exceeds a predetermined threshold. Where the shift lever includes a shaft portion, and a knob which is pivotally connected to the shaft portion, for example, at least one ON-OFF detector switch may be disposed between the knob and the shaft portion, so that a plunger of the detector switch is moved to turn on or off the detector switch, by a pivotal movement of the knob relative to the shaft portion, which takes place when the operating force acting on the knob exceeds the predetermined threshold value. The knob is pivoted relative to the shaft portion, in the presence of a certain resistance to a movement of the shift lever from one of the drive positions to the neutral position or vice versa. Such a resistance exists due to an operative connection of the shift lever to the transmission or the provision of a suitable device for applying such a resistance to the shift lever.

The apparatus according to the fourth aspect of this invention may be adapted such that the low-speed drive position determining device includes neutral position detecting means operable in response to output signals of the two load sensing switches, for detecting a shifting action of the transmission from one of the two low-speed drive positions to a neutral position of the transmission.

### BRIEF DESCRIPTION OF THE DRAWINGS

The features, advantages and technical and industrial significance of this invention will be better understood by reading the following detailed description of presently preferred embodiments of the invention, when considered in connection with the accompanying drawings, in which:
FIG. 1 is a schematic view of a vehicle drive system including a vehicle drive control apparatus constructed according to one embodiment of the present invention;
FIG. 2 is a view showing an example of an automatic clutch provided in the vehicle drive system of FIG. 1;
FIGs. 3A, 3B, 3C and 3D are views showing a synchro-mesh coupling clutch provided in a transmission of the vehicle drive system of FIG. 1;
FIG. 4 is an elevational view in cross section of a shift position selector shaft provided in the transmission of the vehicle drive system of FIG. 1;
FIG. 5 is a fragmentary view of a neutral position detector switch for detecting completion of a shifting action of the transmission, which switch is operated by rotation of the shift position selector shaft shown in FIG. 4;
FIG. 6 is a view showing a shift pattern of a shift lever, and ON and OFF states of a neutral position detector switch in relation to movements of the shift lever;
FIG. 7 is a view for explaining an operation of a 1-2 detector switch for detecting a shifting action of the transmission to its first-speed or second-speed drive position, on the basis of a movement of a fork shaft provided in the transmission;
FIG. 8 is a block diagram showing the vehicle drive control apparatus for controlling the vehicle drive system of FIG. 1;
FIG. 9 is a flow chart illustrating a clutch control routine for controlling the automatic clutch of the vehicle drive system of FIG. 1;
FIG. 10 is a block diagram corresponding to that of FIG. 8, showing a vehicle drive control apparatus according to a second embodiment of this invention;
FIG. 11 is an elevational view in cross sectional of a shift lever incorporating load sensing switches, used in the second embodiment of FIG. 10;
FIG. 12 is a view showing a shift patter of the shift lever of FIG. 11, and ON and OFF states of the neutral position detector switch, the 1-2 detector switch and a reverse switch, in relation to movements of the shift lever;
FIG. 13 is a flow chart illustrating a drive position determining routine executed in the second embodiment of FIG. 10, for determining a currently established drive position of the transmission; and
FIG. 14 is a flow chart illustrating a clutch control routine executed in the second embodiment of FIG. 10, for controlling the automatic clutch.

### DETAILED DESCRIPTION OF THE PREFERRED EMBODIMENTS

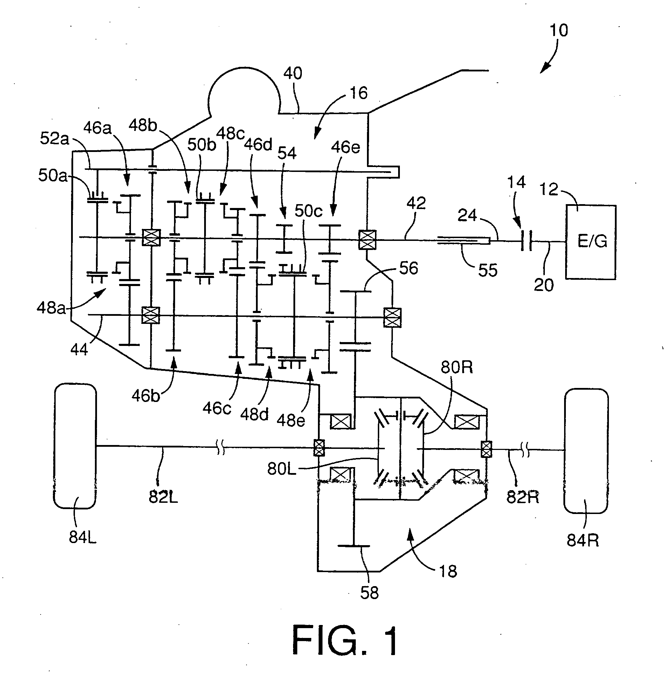

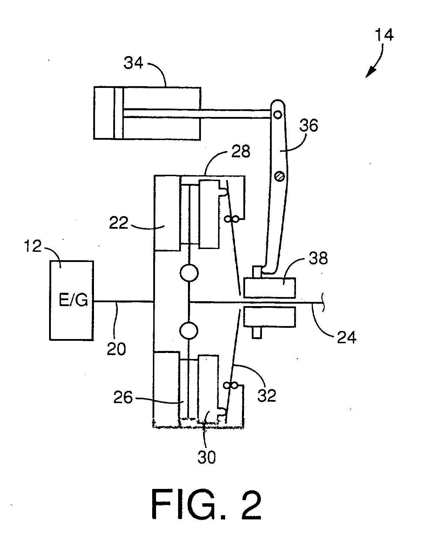

Referring first to FIG. 1, there is schematically shown a drive system 10 of an FF (front-engine front-drive) automotive vehicle. This vehicle drive system 10 includes a drive power source in the form of an engine 12, an automatic clutch 14, a transmission 16 and a differential gear device 18. The automatic clutch 14, which is a dry single-disc type friction clutch as shown in FIG. 2, includes: a flywheel 22 attached to a crankshaft 20 of the engine; an output shaft 24; a clutch disc 26 fixed to the output shaft 24; a clutch housing 28; a pressure plate 30 fixed to the clutch housing 28; a diaphragm spring 32 for biasing the pressure plate 30 toward the flywheel 22, to force the pressure plate 30 onto the clutch disc 26, for thereby transmitting a drive power from the crankshaft 20 to the output shaft 24; a clutch releasing cylinder 34; a releasing arm 36 connected to a piston rod of the clutch releasing cylinder 34; and a releasing sleeve 38 operated by the clutch releasing cylinder 34 through the releasing arm 36, to move the radially inner portion of the diaphragm spring 32 in the left direction as seen in FIG. 2, for releasing the automatic clutch 14.

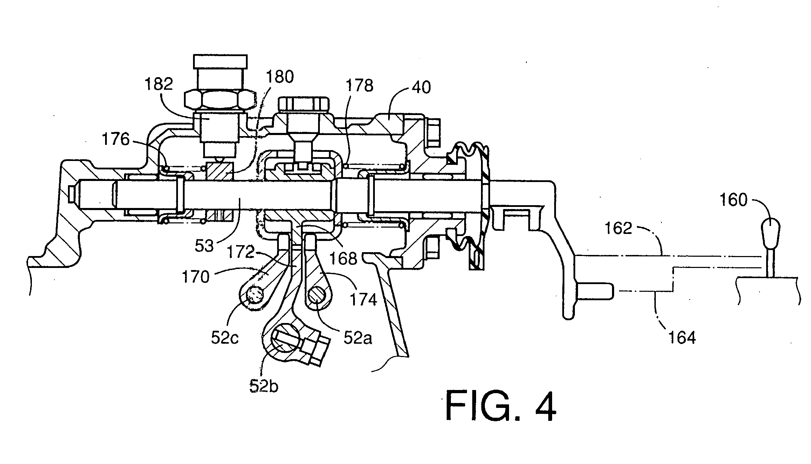

The transmission 16 is disposed in a housing 40, together with the differential gear device 18, so that the transmission 16 and the differential gear device 18 constitute a transaxle unit. The transmission 16 and the differential gear device 18 are lubricated by a bath of an oil in the housing 40. The transmission 16 includes: (a) a shifting mechanism of two-axes type including an input member in the form of an input shaft 42, an output member in the form of an output shaft 44 parallel to the input shaft 42, five sets of shift gears 46a-46e, and five coupling clutches 48a-48e; (b) three fork shafts 52a, 52b, 52c for respectively shifting three clutch hub sleeves 50a, 50b, 50c of the coupling clutches 48a-48e; and (c) a drive position selector shaft 53 operatively connected to a shift lever 160, as shown in FIG. 4, for operating the fork shafts 52a, 52b, 52c, to place the transmission 16 in one of five forward drive positions, as described below in detail. The five sets of gears 46a-46e each set consisting of a gear mounted on the input shaft 42 and a gear mounted on the output shaft 44 have respective different gear ratios. The five coupling clutches 48a-48e are provided for the five sets of shift gears 46a-46e, respectively. The clutch hub sleeve 50a is provided for operative association with the coupling clutch 48a, and the clutch hub sleeve 50b is provided for operative association with the coupling clutches 48b and 48c, while the clutch hub sleeve 50c is provided for operative association with the coupling clutches 48d and 48e. The three fork shafts 52a, 52b, 52c are adapted to engage the respective three clutch hub sleeves 50a, 50b, 50c, for moving these clutch hub sleeves 50a-50c in their axial direction. The drive position selector shaft 53 is mechanically moved by the shift lever 160 in its axial direction as a position-selecting direction, for selective engagement with one of the three fork shafts 52a-52c, and is also mechanically rotated by the shift lever 160 about its axis, for moving the selected one of the fork shafts 52a-52b in the axial direction, to thereby establish one of the five drive positions of the transmission 16. The rotary movement of the drive position selector shaft 53 about its axis is considered to be a movement of the selector shaft 53 in a shifting direction which is perpendicular to the position-selecting direction (axial direction of the selector shaft 53).

The transmission 16 further includes a set of rear-drive shift gears 54 consisting of two gears mounted on the respective input and output shafts 42, 44. The gear of this rear-drive shift gear set 54 which is mounted on the output shaft 44 is held in mesh with a rear-drive idler gear on a countershaft, as well known in the art, for establishing a rear-drive position of the transmission 16. The input shaft 42 is connected to the output shaft 24 of the automatic clutch 14 through a spline connection 55, and the output shaft 44 has an output gear 56 which meshes with a ring gear 58 of the differential gear device 18. It is noted that FIG. 1 is a development view prepared as if the axes of the input and output shafts 42, 44 and the axis of the ring gear 58 lay in the same plane.

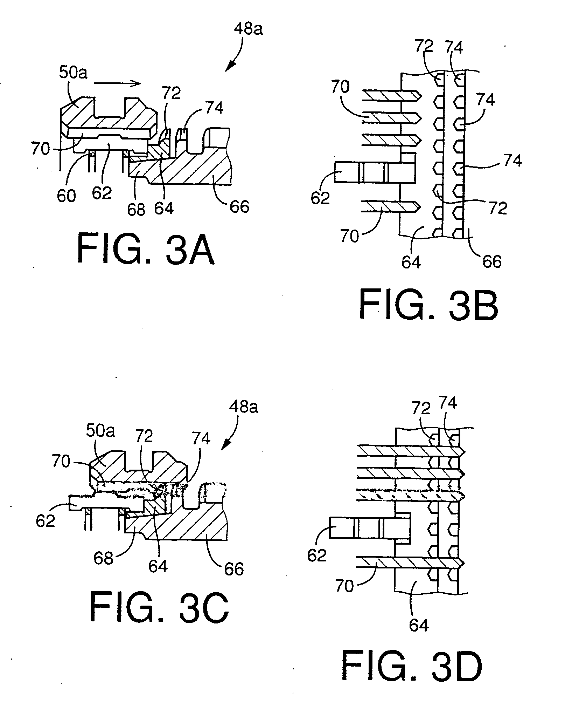

Each of the coupling clutches 48a-48e is of synchro-mesh type. The synchro-mesh coupling clutch 48a is shown in FIGs. 3A, 3B, 3C and 3D, by way of example. As shown in these figures, the synchro-mesh coupling clutch 48a includes: a key spring 60; a shifting key 62 which is held in engagement with the corresponding clutch hub sleeve 50a; a synchronizer ring 64 which is rotated with the shifting key 62 with a predetermined amount of play therebetween; and a coned portion 68 of the input gear 66 of the shift gear set 46a. The clutch hub sleeve 50a has spline teeth 70 formed on its inner circumferential surface, and is splined to the input shaft 42, so that the sleeve 50a is rotated with the input shaft 42. When the clutch hub sleeve 50a is axially moved in the right direction as seen in FIGs. 3A and 3C, the synchronizer ring 64 is brought into pressing contact with the coned portion 68 of the input gear 66 via the shifting key 62, so that a power is transmitted by friction between the input gear 66 and the synchronizer ring 64. A further movement of the clutch hub sleeve 50a to the right will cause engagement of its spline teeth 70 with spline teeth 72 formed on the synchronizer ring 64 and spline teeth 74 formed on the input gear 66, so that the input shaft 42 is rotated with the input gear 66 as a unit, whereby the power is transmitted between the input and output shafts 42, 44 through the shift gear set 46a. FIGs. 3A and 3B show the coupling clutch 48a in its released state, while FIGs. 3C and 3D show the coupling clutch 48b in its engaged state. FIGs. 3A and 3C are cross sectional views taken in a plane including the axes of the relevant components, while FIGs. 3B and 3D are development views of the coupling clutch 48a taken in the radially inward direction, with the cylindrical portion of the clutch hub sleeve 50a being removed.

The other coupling clutches 48b-48e are substantially identical in construction with the coupling clutch 48a. However, the clutch hub sleeve 50b is commonly used for the two coupling clutches 48b and 48c, while the clutch hub sleeve 50c is commonly used for the two coupling clutches 48d and 48e.

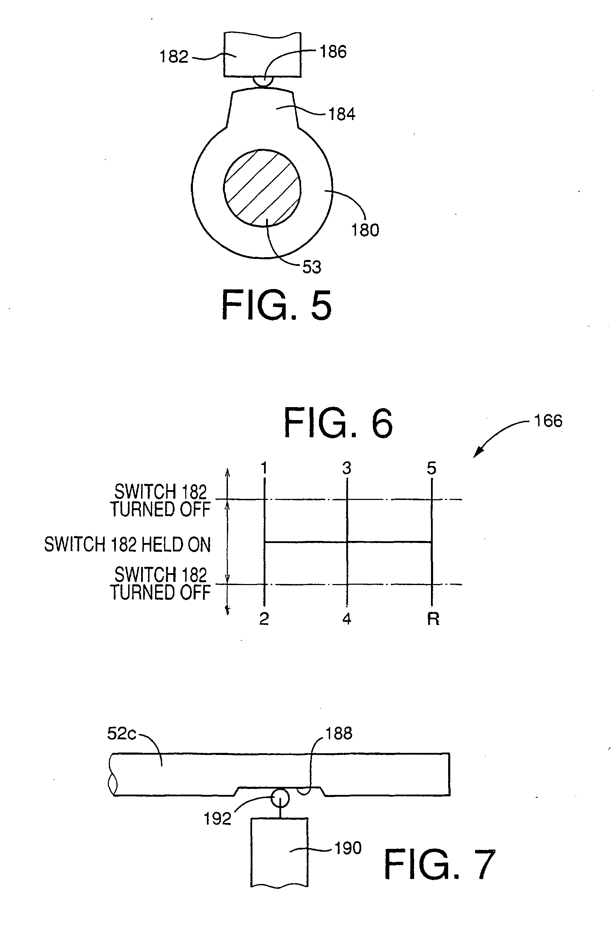

Referring next to FIG. 4, there is shown a drive position selecting member in the form of the drive position selector shaft 53, which is operatively connected to the shift lever 160 through a linking mechanism in the form of a first push-pull cable 162 and a second push-pull cable 164. The shift lever 160 is disposed on one side of a vehicle operator's seat, and is movable in the lateral and longitudinal directions of the vehicle. The shift lever 160 has a total of six vehicle drive positions, that is, five forward drive positions "1", "2", "3", "4" and "5" and one rear drive position "R", as indicated in FIG. 6. The forward drive positions "1" through "5" are respectively first-speed, second-speed, third-speed, fourth-speed and fifth-speed positions.

The shift lever 160 is operable to a selected one of the six drive positions, according to a shift pattern 166 indicated in FIG. 6, by lateral and longitudinal movements thereof. When the shift lever 160 is moved in the lateral direction (right and left directions as seen in FIG. 6), the drive position selector shaft 53 is linearly moved in the axial direction through the first push-pull cable 162. When the drive position selector shaft 53 is moved in the longitudinal direction (up and down directions as seen in FIG. 6), the drive position selector shaft 53 is rotated about its axis through the second push-pull cable 164. The drive position selector shaft 53 has three axial positions and three angular positions. The shift pattern 166 is formulated such that the first axial position corresponds to the first-speed and second-speed drive positions "1" and "2", and the second axial position corresponds to the third-speed and fourth-speed drive positions "3" and "4" while the third axial position corresponds to the fifth-speed drive position "5" and the rear drive position "R". The three angular positions of the selector shaft 53 consist of one neutral angular position, and two drive-position selecting angular positions.

As shown in FIG. 4, the drive position selector shaft 53 has an integrally formed engaging projection 168. When the shift lever 160 is operated to place the drive position selector shaft 53 in the first axial position and the neutral angular position (between the first- and second-speed position selecting angular positions), the engaging projection 168 is brought into engagement with an engaging member 170 of the fork shaft 52c. When the shift lever 160 is operated in this condition to rotate the selector shaft 52 to the first-speed or second-speed position selecting angular position, the fork shaft 52c is axially moved to place the coupling clutch 48e or 48d in its engaged position, so that the transmission 16 is placed in a first-speed forward drive position "1st" or a second-speed forward drive position "2nd". The first-speed drive position "1st" has a highest speed ratio "e" which is represented by N_{IN}/N_{OUT}· "N_{IN}" represents the rotating speed of the input shaft 42, while "N_{OUT}" represents the rotating speed of the output shaft 44. The second-speed drive position "2nd" has a second highest speed ratio "e".

When the shift lever 160 is operated to place the drive position selector shaft 53 in its second axial position and the neutral angular position (between the third- and fourth-speed position selecting angular positions), the engaging projection 168 is brought into engagement with an engaging member 172 of the fork shaft 52b. When the shift lever 160 is operated in this condition to rotate the selector shaft 53 to the third-speed or fourth-speed position selecting angular position, the fork shaft 52b is axially moved to place the coupling clutch 48c or 48b in its engaged position, so that the transmission 16 is placed in a third-speed forward drive position "3rd" or a fourth-speed forward drive position "4th". These drive positions "3rd" and "4th" have third and fourth highest speed ratios "e". The speed ratio "e" of the fourth-speed forward drive position "5th" is set to be substantially equal to "1".

When the shift lever 160 is operated to place the drive position selector shaft 52 in its third axial position and the neutral angular position (between the fifth-speed and rear-drive position selecting angular positions), the engaging projection 168 is brought into engagement with an engaging member 174 of the fork shaft 52a. When the shift lever 160 is operated in this condition to rotate the selector shaft 53 to the fifth-speed position selecting angular position, the fork shaft 52a is axially moved to place the coupling clutch 48a in its engaged position, so that the transmission 16 is placed in a fifth-speed forward drive position "5th" whose speed ratio "e" is the lowest. When the shift lever 160 to rotate the selector shaft 53 to the rear-drive position selecting angular position, the fork shaft 52a is axially moved in the reverse direction so that the transmission 16 is placed in a rear-drive position "Rev.". Normally, the selector shaft 53 is held in its second angular position (corresponding to the third- and fourth-speed positions "3" and 4") by biasing means in the form of a pair of compression coil springs 176, 178, which act on the selector shaft 53 in the opposite axial directions. It will be understood that the fork shafts 52a, 52b and 52c serve as fork members for engaging and releasing the coupling clutches 48a-48e.

The drive position selector shaft 53 has a switch dog member 180 fixedly mounted thereon, as shown in FIG. 5. The switch dog member 180 is a generally cylindrical member having a radially projecting dog portion 184 formed over a predetermined range of angle about its axis. On the other hand, a neutral position detector switch 182 in the form of an ON-OFF limit switch is disposed on the housing 40. While the selector shaft 53 is placed in its neutral angular position, the dog portion 184 is held in engagement with a plunger 186 of the neutral position detector switch 182. The dog portion 184 has an axial dimension (as measured in the axial direction of the selector shaft 53) which is large enough to maintain its engagement with the plunger 186 irrespective of the axial position of the selector shaft 53, that is, at the first, second and third axial positions discussed above.

Thus, the neutral position detector switch 182 is held in its ON state when the drive position selector shaft 53 is placed in its neutral angular position (when the transmission 16 is placed in its neutral position "N"), as indicated in FIG. 6. When the selector shaft 53 is rotated about its axis to one of its two drive-position selecting angular positions also discussed above, to place the transmission 16 in one of the five forward drive positions or the rear-drive position, the dog portion 184 of the switch dog member 180 is disengaged from the plunger 186 of the neutral position detector switch 182, whereby the detector switch 182 is turned OFF, as also indicated in FIG. 6. The angular positions of the selector shaft 53 at which the detector switch 182 is turned OFF are determined such that the selected drive position of the transmission 16 has been completely established when the detector switch 182 is turned OFF. More precisely explained by reference to FIG. 3, the detector switch 182 is turned OFF when the spline teeth 70 of the clutch hub sleeve 50a have been completely brought into engagement with the spline teeth 74 of the input gear 66. These angular positions of the selector shaft 53 are indicated by one-dot chain lines in FIG. 6.

It will be understood that the neutral position detector switch 182 adapted to detect the neutral position of the transmission 16 also serves as a shifting completion detector for detecting that a shifting action of the transmission 16 to a selected one of the five forward drive positions and one rear drive position has been completed.

The fork shaft 52c has a recess 188 formed over a predetermined axial length, as shown in FIG. 7. On the other hand, a low-speed drive position detector switch 190 in the form of an ON-OFF limit switch is disposed on the housing 40. The low-speed drive position detector switch 190 has a plunger 192 which is held within the recess 188 while the drive position selector shaft 53 is placed in its neutral angular position. When the fork shaft 52c is moved in one of the opposite axial directions (right and left directions as seen in FIG. 7) by rotation of the selector shaft 53 to one of the drive-position selecting angular positions to select and establish the first-speed drive position "1st" or second-speed drive position "2nd" of the transmission 16, one of opposite side surfaces defining the axial length of the recess 188 is brought into abutting contact with the plunger 192 of the low-speed drive position detector switch 190, so that the detector switch 190 is turned ON. The recess 188 is positioned and dimensions so that the detector switch 190 is turned ON before the neutral position detector switch 182 is turned OFF. Thus, a fact that the low-speed drive position detector 190 is turned ON indicates the selection of the first- or second-speed drive position "1st" or "2nd", or that the transmission 16 is in a process of a shifting action to the first- or second-speed drive position "1st" or "2nd". Each of the first- and second-speed drive positions "1st" and "2nd" is considered to be a low-speed drive position whose speed ratio "e" is relatively high. In this respect, the detector switch 190 is referred to as the low-speed position detector switch 190.

Referring back to FIG. 1, the differential gear device 18 is of a bevel gear type, including a pair of side gears 80R, 80L which are splined to respective drive shafts 82R, 82L for rotating front wheels (drive wheels) 84R, 84L.

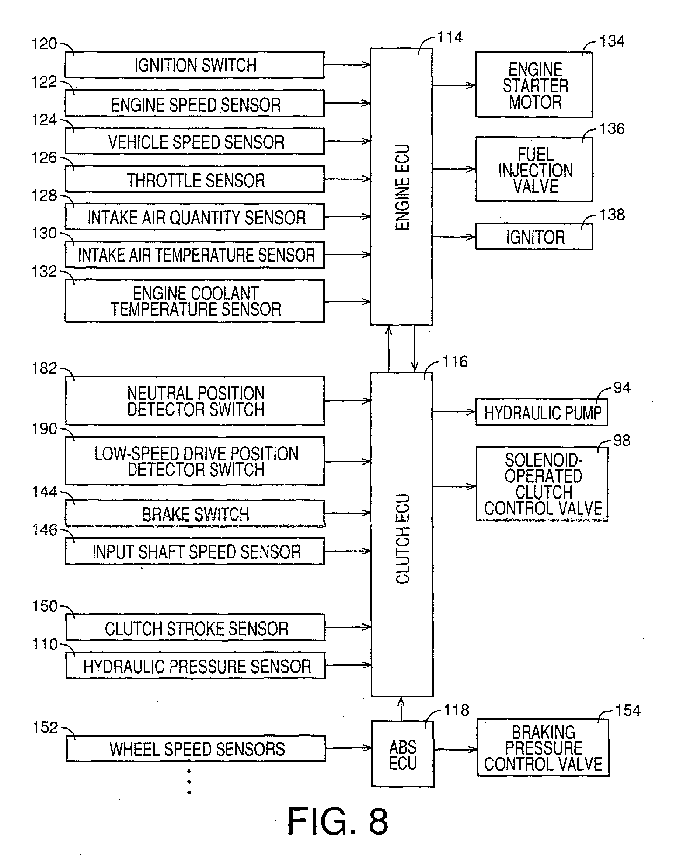

Reference is now made to the block diagram of FIG. 8, which shows a control device for the vehicle drive system 10. The control device includes an electronic engine control unit 114 (hereinafter referred to as "engine ECU 114"), an electronic clutch control unit 116 (hereinafter referred to as "clutch ECU 116"), and an electronic anti-lock brake control unit 118 (hereinafter referred to as "ABS ECU 118"). These engine ECU 114, clutch ECU 116 and ABS ECU 118 are interconnected to each other for mutual data communication. Each of the ECUs 114, 116, 118 includes a microcomputer incorporating a random access memory (RAM0 and a read-only memory (ROM) and capable of performing signal processing operations according to control programs stored in the ROM while utilizing a temporary data storage function of the RAM.

The engine ECU 114 is adapted to receive output signals of various sensors and switches such as: an ignition switch 120; an engine speed sensor 122 whose output signal indicates an operating speed N_{E} of the engine 12; a vehicle speed sensor 124 whose output signal indicates a running speed V of the vehicle; a throttle sensor 126 whose output signal indicates an opening angle θ_{TH} of a throttle valve of the engine; an intake air quantity sensor 128 whose output signal indicates an intake air quantity Q of the engine 12; an intake air temperature sensor 130 whose output signal indicates a temperature T_{A} of the intake air of the engine 12; and an engine coolant temperature sensor 132 whose output signal indicates a temperature T_{W} of a coolant water of the engine 12. Based on the output signals of the sensors indicated above, the engine ECU 114 controls an engine starter motor 134 for starting the engine 12, a fuel injection valve 136 for injecting a fuel into the engine 12, and an ignitor 138 for controlling an ignition timing of each spark plug of the engine 12. By controlling the fuel injection valve 136, the injection amount and timing of the fuel are controlled. The ignition switch 120 has an OFF position, an ON position and a START position. When the ignition switch 120 is turned to the START position, the engine ECU 114 activates the engine starter motor 134 to start the engine 12.

The clutch ECU 116 is adapted to receive output signals of various switches and sensors such as: the above-indicated drive position detector switch 182 whose output signal indicates whether any one of the drive positions of the transmission 16 has been established; the above-indicated low-speed position detector switch 192 whose output signal indicates whether one of the first-speed and second-speed drive positions "1st" and "2nd" has been selected or in the process of being established; a brake switch 144 whose output signal indicates whether a braking system of the vehicle is in operation; an input shaft speed sensor 146 whose output signal indicates the rotating speed N_{IN} of the input shaft 42 of the transmission 16; a clutch stroke sensor 150 whose output signal indicates an operating stroke S_{CL} of the automatic clutch 14 (operating stroke of the clutch releasing cylinder 34); and a hydraulic pressure sensor 110 whose output signal indicates a hydraulic pressure P_{O} in the clutch releasing cylinder 34. Based on the output signals of the switches and sensors indicated above and the signals received from the engine ECU 114 and ABS ECU 118, the clutch ECU 116 controls a hydraulic pump 94 and a solenoid-operated clutch control valve 98 for controlling the clutch releasing cylinder 34, to thereby effect disengagement and engagement controls of the automatic clutch 14 after shifting of the transmission 16, and engagement control of the automatic clutch 14 during starting of the vehicle.

The ABS ECU 118 is adapted to receive output signals of wheel speed sensors 152 which indicate rotating speeds N_{W} of the four vehicle wheels. Based on the detected wheel speeds N_{W} and the vehicle running speed V received from the engine ECU 114, the ABS ECU 118 calculates an amount of slip of each wheel, and a controls braking pressure control valve 154 to regulate the braking pressure for each wheel so as to prevent an excessive amount of slip of the wheel.

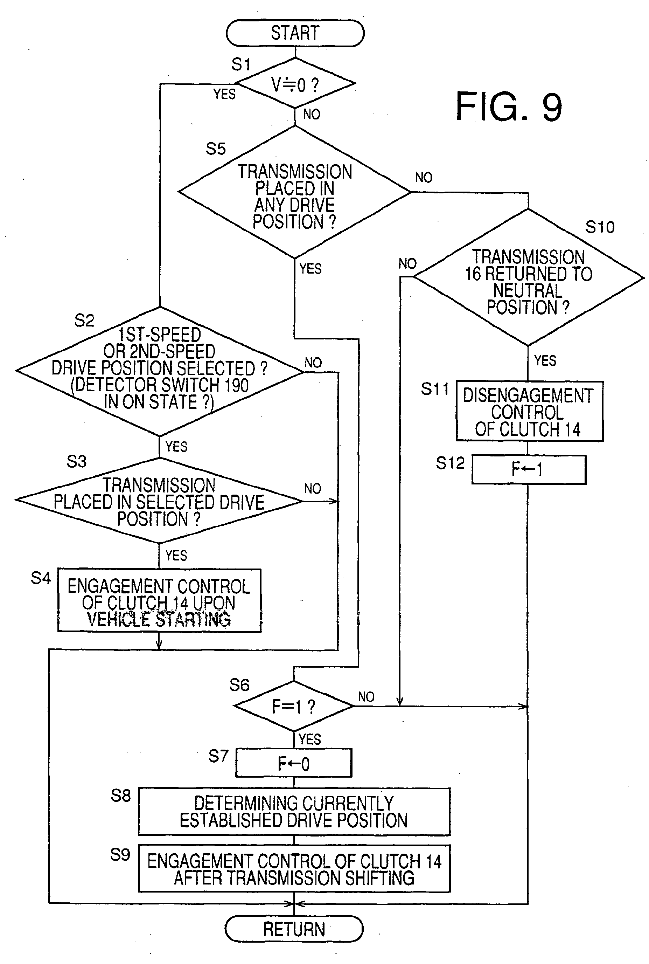

Referring next to a flow chart of FIG. 9, there will be described a clutch control routine executed by the clutch ECU 116 for effect the engagement and disengagement controls of the automatic clutch 14. This clutch control routine of FIG. 9 is repeatedly executed with a predetermined cycle time.

The clutch control routine of FIG. 9 is initiated with step S1 to determine whether the vehicle is in a stop with the vehicle running speed V being substantially zero. If an affirmative decision (YES) is obtained in step S1, the control flow goes to step S2. If a negative decision (NO) is obtained in step S1, the control flow goes to step S5. Step S2 is provided to determine whether the low-speed drive position of the transmission 16, that is, whether either the first-speed drive position "1st" or the second-speed drive position "2nd" has been selected. This determination is based on the output signal of the low-speed drive position detector switch 190. If the detector switch 190 is in the ON state, it means that the first- and second-speed drive position "1st" or "2nd" has been selected. If an affirmative decision (YES) is obtained in step S2, the control flow goes to step S3 to determine whether the transmission 16 has been brought to the first- or second-speed drive position "1st" or "2nd", that is, whether the selected first- or second-speed drive position "1st" or "2nd" has been completely established. This determination is based on the output signal of the neutral position detector switch 182. If an affirmative decision (YES) is obtained in step S3, the control flow goes to step S4 to effect the engagement control of the automatic clutch 14 during starting of the vehicle with the vehicle running speed V being substantially zero, wherein the solenoid-operated clutch control valve 98 is switched to effect the engagement of the automatic clutch 14, and the hydraulic pressure P_{O} in the clutch releasing cylinder 34 is controlled, depending upon the detected engine speed N_{E} and throttle opening angle θ_{TH}, so that the automatic clutch 14 is engaged at a suitably controlled velocity.

If the negative decision (NO) Is obtained in step S1, that is, if the detected vehicle running speed V is not substantially zero, the control flow goes to step S5 to determine whether any one of the drive positions of the transmission 16 has been completely established. This determination is based on the output signal of the neutral position detector switch 182. If an affirmative decision (YES) is obtained in step S5, the control flow goes to step S6. If a negative decision (NO) is obtained in step S5, the control flow goes to step S10. Step S10 is provided to determine whether the transmission 16 has been returned to the neutral position "N" from any one of the drive positions, namely, whether the shift lever 160 has been operated from any one of the drive positions "1" through "5" and "R" to the neutral position "N". If an affirmative decision (YES) is obtained in step S10, the control flow goes to step S11 to control the solenoid-operated clutch control valve 98 for releasing the automatic clutch 14. Then, step S12 is implemented to set a SHIFT flag F to "1".

If the affirmative decision (YES) is obtained in step S5, that is, if any one of the drive positions of the transmission 16 has been completely established, the control flow goes to step S6 to determine whether the SHIFT flag F is currently set at "1". If an affirmative decision (YES) is obtained in step S6, that is, if the transmission 18 has been placed in a newly selected drive position, the control flow goes to step S7 to reset the SHIFT flag F to "0", and then to step S8 to obtain the present speed ratio "e" of the transmission 16, and determine the currently established drive position of the transmission 16 on the basis of the thus obtained present speed ratio "e" and according to a predetermined relationship between the individual drive positions of the transmission 16 and their values of the speed ratio "e". The speed ratio "e" is obtained by dividing the rotating speed N_{IN} of the input shaft 42 by the rotating speed N_{OUT} of the output shaft 44 (calculated from the detected vehicle running speed V). The above-indicated predetermined relationship is stored in the ROM of the clutch ECU 116. Step S8 is followed by step S9 to effect the engagement control of the automatic clutch 14, by switching the solenoid-operated clutch control valve 98 to engage the automatic clutch 14 and controlling the hydraulic pressure P_{O} in the clutch releasing cylinder 34, depending upon the drive position of the transmission 16 determined in step S8, the detected engine speed N_{E}, the detected throttle opening angle θ_{TH}, and the type of the shifting action of the transmission 16 which has been made last.

It will be understood that a portion of the clutch ECU 116 assigned to implement step S2 and the low-speed drive position detector switch 190 cooperate to constitute a low-speed drive position detecting device for detecting that the low-speed drive position "1st" or "2nd" of the transmission 16 is currently selected, and that a portion of the clutch ECU 116 assigned to implement steps S3 and S5 and the neutral position detector switch 182 cooperate to constitute a shifting completion determining device for determining that a shifting action of the transmission 16 is completed. It will also be understood that a portion of the clutch ECU 116 assigned to implement step S8 constitutes a selected drive position determining device for determining the drive position of the transmission 16 which is currently selected or established, and that a portion of the clutch ECU 116 assigned to implement steps S5, S6 and S9-S12 constitutes a transmission-shifting clutch control device for controlling the automatic clutch 14 after a shifting action of the transmission 16 to one of its drive positions or to its neutral position. It will also be understood that a portion of the clutch ECU 116 assigned to implement to steps S2-S4 constitutes a vehicle-starting clutch control device for controlling the automatic clutch 14 during starting of the vehicle. It will further be understood that a portion of the clutch ECU 116 assigned to implement step S2 constitutes a clutch engagement inhibiting device for inhibiting engagement of the automatic clutch 14 while the transmission 16 is placed in any one of drive positions ("3rd", "4th", "5th" and "R") other than the low-speed drive position, that is, other than the first- and second-speed drive positions "1st" and "2nd".

In the vehicle drive control apparatus including the clutch ECU 116, the currently established drive position of the transmission 16 is estimated or determined in step S8 based on the speed ratio "e" of the rotating speeds N_{IN} and N_{OUT} of the input and output shafts 42, 44 of the transmission 16. Further, the vehicle-starting clutch control device (116, steps S2-S4) is capable of detecting the low-speed drive position (i.e., first-speed and second-speed drive positions "1st" and "2nd") of the transmission 16 even while the vehicle is in a stop, by using a single ON-OFF switch in the form of the low-speed drive position detector switch 190. Thus, the present vehicle drive control apparatus permits suitable engagement control of the automatic clutch 14 (in step S4) using the single ON-OFF switch, and therefore assures improved life expectancy of the automatic clutch 14. Accordingly, the number of the sensors necessary to detect the currently selected drive position of the transmission 16 and control the automatic clutch 14 is reduced, leading to a reduced cost of manufacture of the vehicle drive control apparatus.

Further, a single ON-OFF switch in the form of the neutral position detector switch 182 is used to determine that the transmission 16 has been shifted to any one of a plurality of forward drive positions and one rear drive position, so that the engagement control of the automatic clutch 14 is effected in step S9 with high accuracy after completion of a shifting action of the transmission 16 to any one of those drive positions. Accordingly, the present vehicle drive control apparatus is available at a lower cost than a vehicle drive control apparatus wherein a plurality of detector switches or sensors are provided to detect that the transmission has been shifted to respective drive positions. In addition, the neutral position detector switch 182 is arranged to be turned OFF when the drive position selector shaft 53 has been rotated to the angular position at which the coupling clutches 48a-48e are fully and completely engaged. This arrangement assures accurate detection of the completion of the shifting action of the transmission 16 to a selected one of the drive positions.

It is also noted that the present vehicle drive control apparatus is adapted to detect the completion of a shifting action of the transmission 16 on the basis of the output signal of the neutral position detector switch 182 (in step S5), and to identify or determine the currently established drive position of the transmission 16 (in step S8), so that the engagement control of the automatic clutch 14 after the completion of each shifting action of the transmission 16 (in step S9) can be achieved so as to meet the specific shifting action, for instance, a shift-down action from the third-speed drive position "3rd" down to the second-speed drive position "2nd".

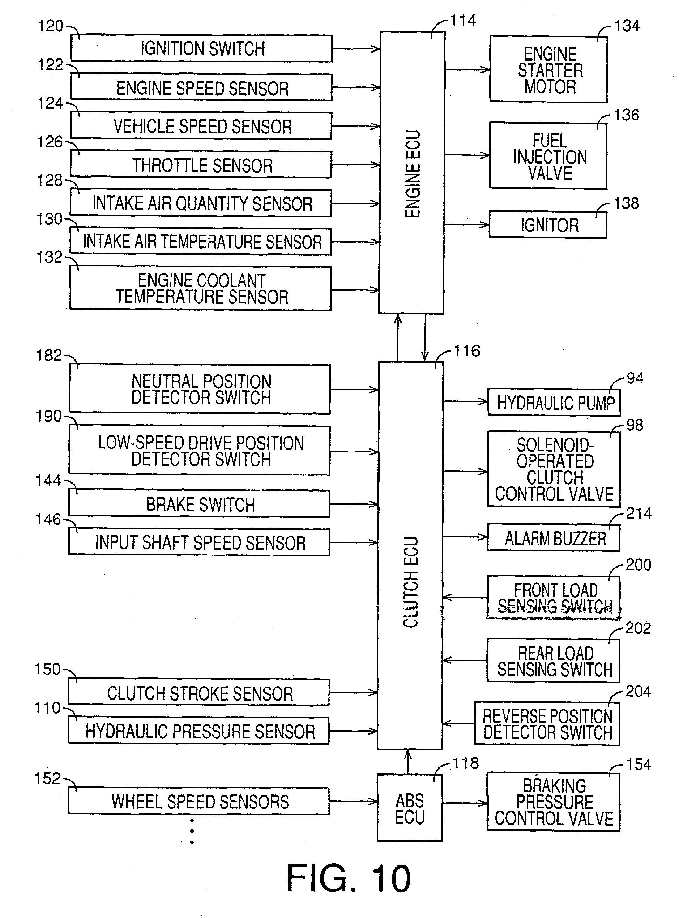

Referring next to FIG. 10-14, a second embodiment of this invention will be described. In the second embodiment, the same reference numerals as used in the first embodiment will be used to identity the same elements, which will not be described to avoid redundancy of description.

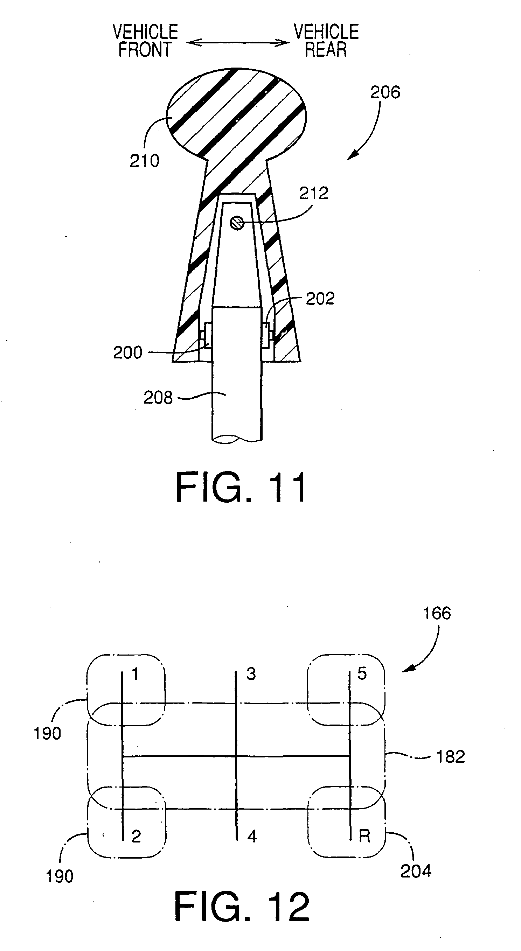

The block diagram of FIG. 10 corresponding to that of FIG. 8 shows a vehicle drive control apparatus according to the second embodiment of the invention, which further includes a front load sensing switch 200, a rear load sensing switch 202, and a reverse position detector switch 204. The sensing switches 200, 202 function as a load sensor for detecting a direction in which an operating force acts on the shift lever 206. The clutch ECU 116 is adapted to receive output signals of these switches 200, 202, 204 each having an ON state and an OFF state. The front and rear load sensing switches 200, 202 constitute a load sensor incorporated in a shift lever 206 shown in FIG. 11, for detecting loads which act on the shift lever 206 in opposite directions. On the basis of the output signals of the load sensing switches 200, 202, the direction of operation of the shift lever 206 can be detected as described below in detail.

The shift lever 206 includes a shaft portion 208, and a knob 210 which is connected to the shaft portion 208 such that the knob 218 is pivotable about a pin 212 which extends substantially in parallel with the lateral direction of the vehicle. In other words, the pin 212 extends in parallel with the right and left directions as seen in FIG. 12, which shows the shift pattern 166 of the shift lever 206. The front load sensing switch 200 is interposed between a lower portion of the knob 210 and a portion of the shaft portion 208 which corresponds to the lower portion of the knob 210. The front load sensing switch 200 is located at a circumferential position of the shaft portion 208 which corresponds to the front side of the vehicle. When the knob 210 is pivoted about the pin 212 in the counterclockwise direction with an operating force larger than a given value (e.g., 10-15N) acting on the head of the knob 210 in the forward direction, the front load sensing switch 200 is turned ON. The rear load sensing switch 202 is also interposed between the lower portion of the knob 210 and the corresponding portion of the shaft portion 208, and is located at a circumferential position of the shaft portion 208 which corresponds to the rear side of the vehicle. When the knob 210 is pivoted about the pin 212 in the clockwise direction with an operating force larger than the given value acting on the head of the knob 210 in the rearward direction, the rear load sensing switch 202 is turned ON.

Described more specifically by reference to the shift pattern 166 of the shift lever 206 indicated in FIG. 12, the front load sensing switch 200 is turned ON when the shift lever 206 is operated from one of the second-speed, fourth-speed and reverse drive positions "2", "4", "R" to the neutral position, or from the neutral position to one of the first-speed, third-speed and fifth-speed drive positions "1", "3", "5", while the rear load sensing switch 202 is turned ON when the shift lever 206 is operated from one of the first-speed, third-speed and fifth-speed drive positions "1", "3", "5" to the neutral position, or from the neutral position to one of the second-speed, fourth-speed and reverse drive positions "2", "4", "R".

Each of the load sensing switches 200, 202 has a spring permitting its plunger to be moved inwardly when the operating force acting on the knob 210 is larger than the given upper limit. In this respect, it is noted that the transmission 16 including the drive position selector shaft 53 and the fork shafts 52a, 52b, 52c provides a certain resistance to a pivotal movement of the knob 210 relative to the shaft portion 208 when the shift lever 206 is operated from the neutral position to one of the drive positions or vice versa. Although the pin 212 is located at an upper end portion of the shaft portion 208 while the load sensing switches 200, 202 are disposed below the pin 212 in the second embodiment of FIG. 11, the shift lever 206 may be modified such that the pin 212 is located at a lower portion of the knob 210 while the load sensing switches 200, 202 are disposed above the pin 212. In this modified arrangement, the front load sensing switch 200 is located at a circumferential position of the shaft portion 208 corresponding to the rear side of the vehicle, while the rear load sensing switch 202 is located at a circumferential position of the shaft portion 208 corresponding to the front side of the vehicle.

The reverse position detector switch 204 is turned ON when the shift lever 206 is operated to the reverse drive position "R" to shift the transmission 16 to the reverse drive position "Rev.". This detector switch 204 may be associated with the shaft portion 208 of the shift lever 206, or the fork shaft 52a. FIG. 12 indicates not only the shift pattern 166 of the shift lever 206, but also ranges in which the neutral position detector switch 182, low-speed drive position detector switch 190 and reverse position detector switch 204.

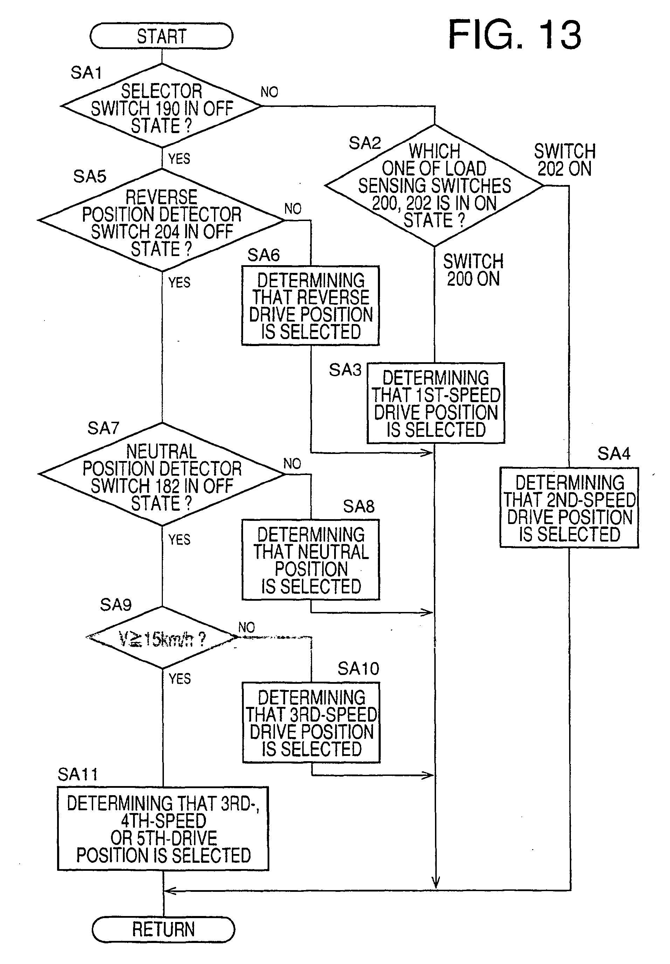

Referring to a flow chart of FIG. 13, there will be described a drive position determining routine executed by the clutch ECU 116 for detecting the currently selected position of the shift lever 206 or the currently established drive position of the transmission 16, on the basis of the output signals of the switches 182, 190, 200, 202, 204 and the rotating speeds N_{IN} and N_{OUT} of the input and output shafts 42, 44 of the transmission 16.

The drive position determining routine of FIG. 13 is initiated with step SA1 to determine whether the low-speed drive position detector switch 190 is in the OFF state, that is, whether the transmission 16 is placed in a drive position other than the first- and second-speed drive positions "1st" and "2nd". If a negative decision (NO) is obtained in step SA1, it means that the detector switch 190 is in the ON state, that is, the transmission 16 is placed in either the first-speed drive position "1st" or the second-speed drive position "2nd". In this case, the control flow goes to step SA2 to determine which one of the front and rear load sensing switches 200, 202 is in the ON state. This determination is made by comparing ON times of the two load sensing switches 200, 202 in a time period of 100msecs after the low-speed drive position detector switch 190 has been turned ON. If the ON time of the front load sensing switch 200 is longer than that of the rear load sensing switch 202, it is determined that the front load sensing switch 200 is in the ON state. In this case, the control flow goes to step SA3 to determine that the transmission 16 is placed in the first-speed drive position "1st". If the ON time of the rear load sensing switch 200 is longer than that of the front load sensing switch 200, it is determined that the rear load sensing switch 202 is in the ON state. IN this case, the control flow goes to step SA4 to determine that the transmission 16 is placed in the second-speed drive position "2nd". If the ON times of the two sensing switches 200, 202 are equal to each other, for example, if the ON times of the two sensing switches 200, 202 are both zero, the control flow goes to step SA3 to determine that the first-speed drive position "1st" is selected. The time period of 100msecs. indicated above is determined based on an estimated minimum time (e.g., about 70msecs.) from a moment at which the low-speed drive position detector switch 190 has been turned ON, to a moment at which the shift lever 206 has been shifted to the position "1" or "2". However, the time period in question may be suitably determined depending upon the operating stroke of the shift lever 206 and the position at which the detector switch 190 is turned ON or OFF. It will be understood that a portion of the clutch ECU 116 assigned to implement steps SA2-SA4 constitutes the low-speed drive position detecting device for detecting the low-speed drive positions "1st", "2nd" of the transmission 16.

If an affirmative decision (YES) is obtained in step SA1, that is, if the low-speed drive position detector switch 190 is in the OFF state, it means that any drive position other than the first- and second-speed drive positions "1st" and "2nd" of the transmission 16 is currently selected. In this case, the control flow goes to step SA5 to determine whether the reverse position detector switch 204 is in the OFF state. If a negative decision (NO) is obtained in step SA5, that is, if the reverse position detector switch 204 is in the ON state, the control flow goes to step SA6 to determine that the reverse drive position "Rev." of the transmission 16 is currently selected. If an affirmative decision (YES) is obtained in step SA5, that is, if the reverse position detector switch 204 is in the OFF state, the control flow goes to step SA7 to determine whether the neutral position detector switch 182 is in the OFF state. If a negative decision (NO) is obtained in step SA7, that is, if the detector switch 182 is in the ON state, the control flow goes to step SA8 to determine that the neutral position of the transmission 16 is selected.

If an affirmative decision (YES) is obtained in step SA7, that is, if the detector switch 182 is in the OFF state, the control flow goes to step SA9 to determine whether the vehicle running speed V is equal to or higher than a threshold value of 15km/h. If a negative decision (NO) is obtained in step SA9, the control flow goes to step SA10 to determine that the third-speed drive position "3rd" of the transmission 16 is currently selected. If an affirmative decision (YES) is obtained in step SA9, the control flow goes to step SA11 to determine which one of the third-, fourth- and fifth-speed drive positions "3rd", "4th" and "5th" is currently selected. This determination is made in the same manner as in step S8 of the clutch control routine of FIG. 9 of the first embodiment. Namely, the current speed ratio "e" of the transmission 16 is calculated by dividing the rotating speed N_{IN} of the input shaft 42 of the transmission 16 by the rotating speed N_{OUT} of the output shaft 44 (calculated from the vehicle running speed v), and the above-indicated determination is made on the basis of the thus calculated speed ratio "3", and according to the predetermined relationship between the individual drive positions of the transmission 16 and their values of the speed ratio "e". The determination that the third-speed drive position "3rd" is currently selected where the vehicle running speed V is lower than 15km/h is based on a fact that the vehicle speed sensor 124 and input shaft speed sensor 146 tend to have relatively large detection errors at a vehicle running speed value lower than the threshold value of 15km/h, resulting in difficulty in accurately determining the currently selected drive position. The threshold value of the vehicle running speed V, which is set at 15km/h in this specific second embodiment, may be suitably selected depending upon the detection accuracy of the sensors 124, 146 and the speed ratios of the third-, fourth- and fifth-speed drive positions. It will be understood that a portion of the clutch ECU 116 assigned to implement step SA11 constitutes a selected drive position determining device for determining the currently selected drive position of the transmission 16.

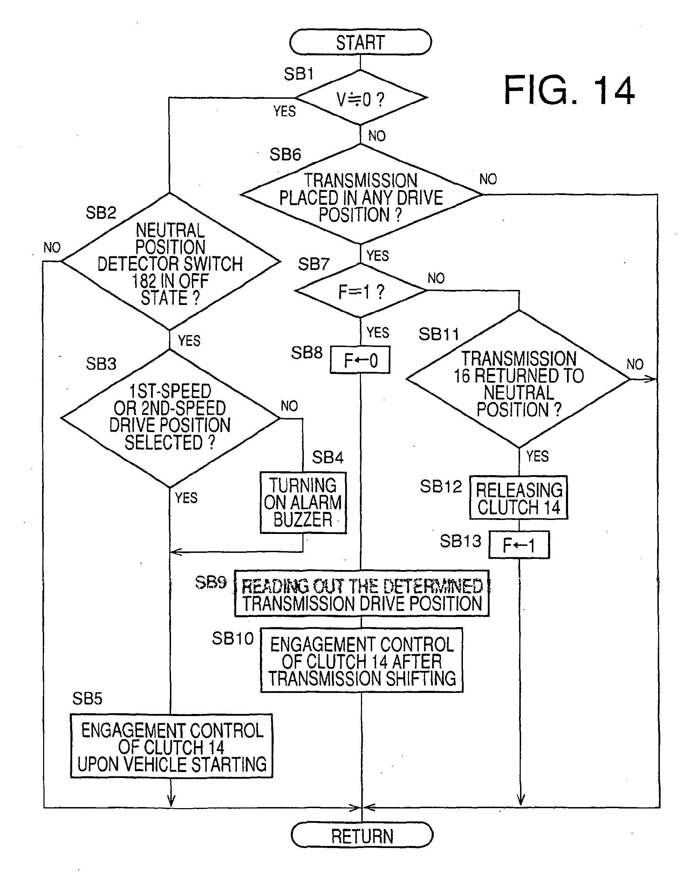

Referring next to a flow chart of FIG. 14, there will be described a clutch control routine executed by the clutch ECU 116 in this second embodiment, in place of the routine of FIG. 9, for effecting disengagement and engagement controls of the automatic clutch 14. In the clutch control routine of FIG. 14, steps SB1, SB3, SB5-SB8, SB10, SB12 and SB13 are substantially identical with steps S1, S2, S4-S7, S9, S11 and S12, respectively. These steps in FIG. 14 will not be described in detail.

Step SB2 implemented when the affirmative decision (YES) is obtained in step SB1 is provided to determine whether the neutral position detector switch 182 is in the OFF state. If a negative decision (NO) is obtained in step SB2, that is, if the detector switch 182 is in the ON position, one cycle of execution of the clutch control routine is terminated. If an affirmative decision (YES) is obtained in step SB2, that is, the detector switch 182 is in the OFF state, it means that any one of the drive positions of the transmission 16 is currently established. In this case, the control flow goes to step SB3 identical with step S2. If the negative decision (NO) is obtained in step SB3, that is, if neither the first-speed drive position "1st" nor the second-speed drive position "2nd" is currently selected, with the low-speed drive position detector switch 190 being placed in the OFF position, the control flow goes to step SB4 to turn on an alarm buzzer 214 (FIG. 10), informing the vehicle operator that the currently selected drive position is not suitable in the present vehicle condition in which the vehicle running speed V is substantially zero. The alarm buzzer 214 functions as an alarming device. Step SB5 is implemented to effect the engagement control of the automatic clutch 14 during starting of the vehicle with the vehicle running speed V being substantially zero, irrespective of whether the negative or affirmative decision is obtained in step SB3.

Step SB9 is implemented in place of step S8 of the first embodiment of FIG. 9, to read out the transmission drive position which has been determined in the selected drive position determining routine of FIG. 13. The determined drive position is stored in the RAM of the clutch ECU 116. Step SB11 is implemented after it is determined in step SB6 that the transmission is placed in any one of the drive positions. SB11 is provided to determine whether the transmission 16 has been returned from any drive position to the neutral position "N". If an affirmative decision (YES) is obtained in step SB11, the control flow goes to step SB12 to fully release the automatic clutch 14. The determination in step SB11 is made on the basis of changes in the ON-OFF operating states of the front and rear load sensing switches 200, 202 and the currently selected drive position. Namely, a determination as to whether an operating force is acting on the shift lever 206 in a direction toward its neutral position. This determination of a shifting action of the shift lever 206 toward its neutral position is made before the neutral position detector switch 182 is turned ON.

It will be understood that a portion of the clutch ECU 116 assigned to implement steps SB6, SB7, SB10 and SB11-SB13 constitutes a transmission-shifting clutch control device for controlling the automatic transmission 16 after a shifting action of the transmission 16.

Like the vehicle drive control apparatus of the first embodiment, the vehicle drive control apparatus of this second embodiment is available at a reduced cost owing to reduction in the number of the switches required for detecting the currently selected or established drive position of the transmission 16 and for controlling the automatic clutch 14 to be suitably engaged and disengaged. Further, a single ON-OFF switch in the form of the neutral position detector switch 182 is used to determine that the transmission 16 has been shifted to any one of a plurality of forward drive positions and one rear drive position, so that the engagement control of the automatic clutch 14 is effected in step SB10 with high accuracy after completion of a shifting action of the transmission 16 to any one of those drive positions. Accordingly, the present vehicle drive control apparatus is available at a lower cost than a vehicle drive control apparatus wherein a plurality of detector switches or sensors are provided to detect that the transmission has been shifted to respective drive positions. In addition, the present vehicle drive control apparatus is adapted to detect the completion of a shifting action of the transmission 16 on the basis of the output signal of the neutral position detector switch 182, and to identify or determine the currently selected drive position of the transmission 16 according to the routine of FIG. 13. Accordingly, the engagement control of the automatic clutch 14 after the completion of each shifting action of the transmission 16 (in step SB10) can be achieved so as to meet the specific shifting action, as in the first embodiment.

The second embodiment is further arranged to determine whether the first- or second-speed drive position of the transmission 16 is currently selected, on the basis of the low-speed drive position detector switch 190, and to active the alarm buzzer 214 in step SB4 if any drive position other than the first- and second-speed drive positions is selected during starting of the vehicle. This arrangement prevents starting of the vehicle with the transmission 16 placed in a high-speed drive position (third-, fourth- or fifth-speed drive position) in which an excessively large load acts on the automatic transmission. The above arrangement is also effective to assure suitable engagement control of the automatic clutch 14 in step SB5 during starting of the vehicle.

The selected drive position determining routine illustrated in the flow chart of FIG. 13 is formulated to implement step SA2 when the low-speed drive position detector switch 190 is turned ON, to determine which one of the first- and second-speed drive positions is currently selected, on the basis of the output signals of the front and rear load sensing switches 200, 202. This arrangement permits higher accuracy of determination of the currently selected first- or second-speed drive position, than in the first embodiment wherein the determination is made on the basis of the calculated speed ratio "e" of the detected rotating speeds of the input and output shafts 42, 44 of the transmission 16. Where the currently detected drive position is determined on the basis of the speed ratio "e", the vehicle speed sensor 124 and the input shaft speed sensor 146 tend to have relatively large detection errors when the vehicle running speed V is relatively low. Accordingly, the speed ratio "e" cannot be obtained with sufficient accuracy at the relatively low vehicle running speed V. Therefore, the determination as to whether the first- or second-speed drive position is currently selected or established is difficult to be achieved with high accuracy, since these first- and second-speed drive positions are usually used at the relatively low vehicle running speed V. If the determination as to whether the first- or second-speed drive position is currently selected were made erroneously, the determination in step SB11 as to whether the transmission 16 is shifted to the neutral position would or would not be made erroneously, and the automatic clutch 14 would be erroneously released when the transmission 16 is in fact shifted to the first- or second-speed drive position. The vehicle drive control apparatus according to this second embodiment does not suffer from such a drawback. Further, the present second embodiment is arranged to determine that the third-speed drive position is currently selected, when the vehicle running speed V is lower than the threshold value of 15km/h. This arrangement prevents erroneous determination that the fourth- or fifth-speed drive position is currently selected, which would take place when the third-speed drive position is in fact currently selected while the vehicle running speed V is lower than 15km/h.

It is also noted that the determination whether the first- or second-speed drive position is currently selected is made by determining the direction in which an operating force acts on the shift lever 206, by using the front and rear load sensing switches 200, 202. This arrangement assures a smaller amount of increase in the sliding resistance during a shifting action of the transmission 16, than in an arrangement wherein two ON-OFF limit switches are used for the first- and second-speed drive positions, respectively. Accordingly, the above arrangement permits smooth operations of the transmission 16 without deteriorated feel of operation of the shift lever 206 due to the increased sliding resistance. It is further noted that the load sensing switches 200, 202 are used not only in step SA2 for determining which one of the first- and second-speed drive positions is currently selected, but also in step SB11 for determining whether the transmission 16 has been shifted from any drive position to the neutral position. Accordingly, the vehicle drive control apparatus is available at a further reduced cost, yet permitting the disengagement control of the automatic clutch 14 (in step SB12) with improved stability.

While the presently preferred embodiments of this invention have been described in detail by reference to the accompanying drawings, for illustrative purpose only, it is to be understood that the invention may be otherwise embodied with various changes or improvements which may occur to those skilled in the art. For instance, the vehicle drive apparatus may be modified for use on a front-engine rear-drive vehicle (FR vehicle).

## Claims

1. An apparatus for controlling a drive system of an automotive vehicle including (a) a drive power source (12), (b) a drive wheel (84), (c) a shift lever (160, 206) operable by an operator of the vehicle, (d) a transmission (16) disposed between said drive power source and said drive wheel and having an input member (42) and an output member (44), and (e) an automatic clutch (14) disposed between said transmission and said drive power source and having an engaged position for connecting said drive power source and said transmission to each other to transmit a power from said drive power source to said transmission and a released position for disconnecting said drive power source and said transmission from each other, said transmission having a plurality of forward drive positions whose speed ratio values are different from each other, and being mechanically operable to selectively establish one of said plurality of forward drive positions according to an operation of said shift lever, said plurality of forward drive positions including a low-speed drive position suitable for starting the vehicle, said apparatus being **characterised by** comprising:
a low-speed drive position detecting device (116, S2, 190) for detecting that said low-speed drive position of said transmission (16) is currently selected; and
a selected drive position determining device (116, S8) for determining a currently selected one of said plurality of forward drive positions of said transmission, on the basis of a ratio of a rotating speed of said input member to that of said output member.

2. An apparatus according to claim 1, further comprising a clutch engagement inhibiting device (116, S2) for inhibiting said automatic clutch (14) from being engaged if said low-speed drive position detecting device does not detect the selection of said low-speed drive position while the vehicle is running at a speed lower than a predetermined threshold.

3. An apparatus according to claim 1 or 2, wherein said transmission (16) includes:
two parallel shafts (42, 44) serving as said input and output members, respectively;
a plurality of shift gear sets (46) whose gear ratio values are different from each other and each of which consists of two gears respectively mounted on said two parallel shafts;
a plurality of coupling clutches (48) provided for said plurality of shift gear sets, respectively, and including respective clutch hub sleeves (50); and
a plurality of fork members (52) engaging said clutch hub sleeves, and selectively moved mechanically according to a movement of said shift lever (160) to move said clutch hub sleeves to selectively establish said plurality of forward drive positions of said transmission,
and wherein said low-speed drive position detecting device (116, S2, 190) includes a single ON-OFF detector switch (190) which is turned on and off according to a movement of one of said plurality of fork members which corresponds to said low-speed drive position.

4. An apparatus according to claim 3, further comprising a shifting completion determining device (116, S3, S5, 182) for determining that a shifting action of said transmission (16) to any one of said plurality of forward drive positions is completed.

5. An apparatus according to claim 4, wherein said ON-OFF detector switch (190) detects that said low-speed drive position is currently selected, before said shifting completion determining device determines that said shifting action is completed.

6. An apparatus according to claim 4, wherein said drive system further includes a transmission-shifting clutch control device (116, S5, S6, S9-S12, SB6, SB7, SB10-SB13) for placing said automatic clutch in said released position during said shifting action of said transmission, and placing said automatic clutch in said engaged position after said shifting completion determining device determines that said shifting action is completed.

7. An apparatus according to claim 4, wherein said transmission (16) includes:
a drive position selecting member (53) which is mechanically moved in a position-selecting direction according to a movement of said operator-controlled shift lever (160, 206) in a first direction, for engagement of said forward drive position selecting member with a selected one of said plurality fork members, said drive position selecting member being mechanically moved in a shifting direction substantially perpendicular to said position-selecting direction, according to a movement of said shift lever in a second direction different from said first direction, so that said selected one of said plurality of fork members is moved to move a corresponding one of said clutch hub sleeves for establishing a corresponding one of said plurality of forward drive positions of said transmission,
and wherein said shifting completion determining device (116, S3, S5, SB6, 182) includes an ON-OFF detector switch (182) whose operating state is switched between an ON state and an OFF state when said drive position selecting member (53) has been moved in said shifting direction to a position at which one of said coupling clutches that corresponds to said selected one of said plurality of fork members has been fully engaged, irrespective of a position of said drive position selecting member in said position-selecting direction.

8. An apparatus according to claim 7, wherein said drive position selecting member is a drive position selector shaft (53) which is linearly moved in an axial direction thereof as said position-selecting direction and which is rotated about an axis thereof, a rotary movement of said drive position selector shaft being a movement of said drive position selecting member in said shifting direction.

9. An apparatus according to claim 4, wherein said transmission further includes a drive position selecting member (53) which is mechanically moved in a position-selecting direction according to a movement of said operator-controlled shift lever (160, 206) in a first direction, for engagement of said drive position selecting member with a selected one of said plurality fork members, said drive position selecting member being mechanically moved in a shifting direction substantially perpendicular to said position-selecting direction, according to a movement of said shift lever in a second direction different from said first direction, so that said selected one of said plurality of fork members is moved to move a corresponding one of said clutch hub sleeves for establishing a corresponding one of said plurality of forward drive positions of said transmission, wherein said shifting completion determining device further comprises:
an ON-OFF detector switch (182) whose operating state is switched between an ON state and an OFF state when said drive position selecting member (53) has been moved in said shifting direction to a position at which one of said coupling clutches that corresponds to said selected one of said plurality of fork members has been fully engaged, irrespective of a position of said drive position selecting member in said position-selecting direction.

10. An apparatus according to claim 9, wherein said shifting completion determining device (116, S3, S5, SB6, 182) further includes a clutch control device (116, S3, S5, SB6) operable in response to an output signal of said ON-OFF detector switch (182), for determining whether said one of said coupling clutches that corresponds to said selected one of said plurality of fork members has been fully engaged.

11. An apparatus for controlling a drive system of an automotive vehicle including (a) a drive power source (12), (b) a drive wheel (84), (c) a shift lever (206) operable by an operator of the vehicle, (d) a transmission (16) disposed between said drive power source and said drive wheel, and (e) an automatic clutch (14) disposed between said transmission and said drive power source and having an engaged position for connecting said drive power source and said transmission to each other to transmit a power from said drive power source to said transmission and a released position for disconnecting said drive power source and said transmission from each other, said transmission having a plurality of forward drive positions whose speed ratio values are different from each other, and being mechanically operable to selectively establish one of said plurality of forward drive positions according to an operation of said shift lever, said plurality of forward drive positions including a plurality of low-speed drive positions suitable for starting the vehicle, said plurality of low-speed drive positions being selectively established by respective movements of said shift lever in respective different directions, said apparatus being **characterised by** comprising:
a low-speed drive position detecting device (116, SA2-SA4, 190, 200, 202) for detecting that one of said plurality of low-speed drive positions of said transmission (16) is currently selected,
said low-speed drive position detecting device including (i) a load sensor (200, 202) for detecting a direction in which an operating force acts on said shift lever (206), and (ii) low-speed drive position determining means (116, SA2-SA4) operable in response to an output signal of said load sensor, for determining which one of said plurality of low-speed drive positions is currently selected, on the basis of the direction represented by said output signal of said load sensor.

12. An apparatus according to claim 11, further comprising a shifting completion determining device (117, SB6, 182) for determining that a shifting action of said transmission (17) to any one of said plurality of drive positions is completed.

13. An apparatus according to claim 11 or 12, wherein said plurality of low-speed drive positions consist of two low-speed drive positions which are established by respective movements of said shift lever (206) in respective two mutually opposite directions along a straight line, and said load sensor includes two load sensing switches (200, 202) for detecting said two mutually opposite directions in which said operating force act on said shift lever.

14. An apparatus according to claim 13, wherein said low-speed drive position determining device (116, SA2-SA4, 190, 200, 202) includes neutral position detecting means (116, SB11) operable in response to output signals of said two load sensing switches (200, 202), for detecting a shifting action of said transmission (16) from one of said two low-speed drive positions to a neutral position of said transmission.

## Patentansprüche

1. Vorrichtung zum Steuern eines Antriebssystems eines Automobils mit (a) einer Antriebsleistungsquelle (12), (b) einem Antriebsrad (84), (c) einem Schalthebel (160, 206), der durch einen Betreiber des Fahrzeugs betätigbar ist, (d) einem Getriebe (16), das zwischen der Antriebsleistungsquelle und dem Antriebsrad angeordnet ist und das ein Eingangselement (42) sowie ein Ausgangselement (44) hat, und (e) einer automatischen Kupplung (14), die zwischen dem Getriebe und der Antriebsleistungsquelle angeordnet ist und eine eingerückte Position zum Verbinden der Antriebsleistungsquelle und des Getriebes miteinander zum Übertragen von Leistung von der Antriebsleistungsquelle zu dem Getriebe und eine gelöste Position zum Trennen der Antriebsleistungsquelle und des Getriebes voneinander hat, wobei das Getriebe eine Vielzahl von Vorwärtsantriebspositionen hat, deren Übersetzungsverhältniswerte voneinander unterschiedlich sind, und wobei es mechanisch betätigbar ist, um wahlweise eine der Vielzahl der Vorwärtsantriebspositionen gemäß einer Betätigung des Schalthebels zu bilden, wobei die Vielzahl der Vorwärtsantriebspositionen eine Niedriggeschwindigkeitsantriebsposition aufweist, zum Starten des Fahrzeugs geeignet ist,
**dadurch gekennzeichnet, dass** die Vorrichtung folgendes aufweist:
eine Niedriggeschwindigkeitsantriebspositionserfassungsvorrichtung (116, S2, 190) zum Erfassen, dass die Niedriggeschwindigkeitsantriebsposition des Getriebes (16) gegenwärtig ausgewählt ist; und
eine Auswahlantriebspositionsbestimmungsvorrichtung (116, S8) zum Bestimmen einer gegenwärtig ausgewählten der Vielzahl der Vorwärtsantriebspositionen des Getriebes auf der Grundlage eines Verhältnisses einer Drehzahl des Eingangselements zu derjenigen des Ausgangselements.

2. Vorrichtung gemäß Anspruch 1, ferner mit einer Kupplungseinrückunterbindungsvorrichtung (116, S2) zum Unterbinden, dass die automatische Kupplung (14) eingerückt wird, wenn die Niedriggeschwindigkeitsantriebspositionserfassungsvorrichtung die Auswahl der Niedriggeschwindigkeitsantriebsposition nicht erfasst, während das Fahrzeug bei einer Geschwindigkeit fährt, die geringer als ein vorbestimmter Grenzwert ist.

3. Vorrichtung gemäß Anspruch 1 oder 2, wobei das Getriebe (16) folgendes aufweist:
zwei parallele Wellen (42, 44), die als Eingangs- bzw. Ausgangselemente dienen;
eine Vielzahl von Getriebesätzen (46), deren Übersetzungsverhältniswerte voneinander unterschiedlich sind und von denen jeder jeweils aus zwei Zahnrädern besteht, die an den zwei parallelen Wellen montiert sind;
eine Vielzahl Schaltkupplungen (48), die für die Vielzahl der Schaltgetriebesätze jeweils vorgesehen sind und die jeweilige Kupplungsnabenmanschetten (50) aufweisen; und
eine Vielzahl Gabelelemente (52), die mit den Kupplungsnabenmanschetten eingreifen und die wahlweise mechanisch gemäß einer Bewegung des Schalthebels (160) bewegt werden, um die Kupplungsnabenmanschetten zu bewegen, um wahlweise die Vielzahl der Vorwärtsantriebspositionen des Getriebes zu bilden,
und wobei die Niedriggeschwindigkeitsantriebspositionserfassungsvorrichtung (116, S2, 190) einen einzigen EIN-AUS-Erfassungsschalter (190) aufweist, der gemäß einer Bewegung von einem der Vielzahl der Gabelelemente ein- und ausgeschaltet wird, das der Niedriggeschwindigkeitsantriebsposition entspricht.

4. Vorrichtung gemäß Anspruch 3, ferner mit einer Schaltabschlussbestimmungsvorrichtung (116, S3, S5, 182) zum Bestimmen, dass ein Schaltvorgang des Getriebes (16) zu einem der Vielzahl der Vorwärtsantriebspositionen abgeschlossen ist.

5. Vorrichtung gemäß Anspruch 4, wobei der EIN-AUS-Erfassungsschalter (190) erfasst, dass die Niedriggeschwindigkeitsantriebsposition gegenwärtig ausgewählt ist, bevor die Schaltabschlussbestimmungsvorrichtung bestimmt, dass der Schaltvorgang abgeschlossen ist.

6. Vorrichtung gemäß Anspruch 4, wobei das Antriebssystem ferner eine Getriebeschaltkupplungssteuervorrichtung (116, S5, S6, S9-S12, SB6, SB7, SB10-SB13) aufweist, um die automatische Kupplung in die gelöste Position während des Schaltvorgangs des Getriebes anzuordnen und die automatische Kupplung in die eingerückte Position anzuordnen, nachdem die Schaltabschlussbestimmungsvorrichtung bestimmt, dass der Schaltvorgang abgeschlossen ist.

7. Vorrichtung gemäß Anspruch 4, wobei das Getriebe (16) folgendes aufweist:
ein Antriebspositionsauswahlelement (53), das mechanisch in eine Positionsauswahlrichtung gemäß einer Bewegung des betreibergesteuerten Schalthebels (160, 206) in eine erste Richtung für einen Eingriff des Vorwärtsantriebspositionsauswahlelements mit einem ausgewählten der Vielzahl der Gabelelemente bewegt wird, wobei das Antriebspositionsauswahlelement mechanisch in eine Schaltrichtung, die im Wesentlichen senkrecht zu der Positionsauswahlrichtung ist, gemäß einer Bewegung des Schalthebels in eine zweite Richtung, die unterschiedlich von der ersten Richtung ist, bewegt wird, so dass das ausgewählte der Vielzahl der Gabelelemente bewegt wird, um eine entsprechende der Kupplungsnabenmanschetten zum Bilden einer entsprechenden der Vielzahl der Vorwärtsantriebspositionen des Getriebes zu bewegen,
und wobei die Schaltabschlussbestimmungsvorrichtung (116, S3, S5, SB6, 182) einen EIN-AUS-Erfassungsschalter (182) aufweist, dessen Betätigungszustand zwischen einem EIN-Zustand und einem AUS-Zustand geschaltet wird, wenn das Antriebspositionsauswahlelement (53) in die Schaltrichtung auf eine Position bewegt wurde, bei der eine der Schaltkupplungen, die dem ausgewählten der Vielzahl der Gabelelemente entspricht, vollständig eingerückt wurde, ungeachtet einer Position des Antriebspositionsauswahlelements in die Positionsauswahlrichtung.

8. Vorrichtung gemäß Anspruch 7, wobei das Antriebspositionsauswahlelement ein Antriebspositionswählschaft (53) ist, der linear in seine axiale Richtung als die Positionsauswahlrichtung bewegt wird und der um seine Achse gedreht wird, wobei eine Drehbewegung des Antriebspositionswählschafts eine Bewegung des Antriebspositionsauswahlelements in die Schaltrichtung ist.

9. Vorrichtung gemäß Anspruch 4, wobei das Getriebe ferner ein Antriebspositionsauswahlelement (53) aufweist, das mechanisch in eine Positionsauswahlrichtung gemäß einer Bewegung des betreibergesteuerten Schalthebels (160, 206) in eine erste Richtung für einen Eingriff des Antriebspositionsauswahlelements mit einem ausgewählten der Vielzahl der Gabelelemente bewegt wird, wobei das Antriebspositionsauswahlelement mechanisch in eine Schaltrichtung, die im Wesentlichen senkrecht zu der Positionsauswahlrichtung ist, gemäß einer Bewegung des Schalthebels in eine zweite Richtung, zu der ersten Richtung unterschiedlich ist, bewegt wird, so dass das ausgewählte der Vielzahl der Gabelelemente bewegt wird, um eine entsprechende der Kupplungsnabenmanschetten zum Bilden einer entsprechenden der Vielzahl der Vorwärtsantriebspositionen des Getriebes zu bewegen, wobei die Schaltabschlussbestimmungsvorrichtung ferner folgendes aufweist:
einen EIN-AUS-Erfassungsschalter (182), dessen Betätigungszustand zwischen einem EIN-Zustand und einem AUS-Zustand geschaltet wird, wenn das Antriebspositionsauswahlelement (53) in die Schaltrichtung auf eine Position bewegt wurde, bei der eine der Schaltkupplungen, die dem ausgewählten der Vielzahl der Gabelelemente entspricht, vollständig eingerückt wurde, ungeachtet einer Position des Betriebspositionsauswahlelements in die Positionsauswahlrichtung.

10. Vorrichtung gemäß Anspruch 9, wobei die Schaltabschlussbestimmungsvorrichtung (116, S3, S5, SB6, 182) ferner eine Kupplungssteuervorrichtung (116, S3, S5, SB6) aufweist, die als Reaktion auf ein Ausgangssignal des EIN-AUS-Erfassungsschalters (182) betreibbar ist, um zu bestimmen, ob die eine der Schaltkupplungen, die dem ausgewählten der Vielzahl der Gabelelemente entspricht, vollständig eingerückt wurde.

11. Vorrichtung gemäß eines Antriebssystems eines Automobils mit (a) einer Antriebsleistungsquelle (12), (b) einem Antriebsrad (84), (c) einem Schalthebel (206), der durch einen Betreiber des Fahrzeugs betätigbar ist, (b) einem Getriebe (16), das zwischen der Antriebsleistungsquelle und dem Antriebsrad angeordnet ist, und (e) einer automatischen Kupplung (14), die zwischen dem Getriebe und der Antriebsleistungsquelle angeordnet ist und eine eingerückte Position zum Verbinden der Antriebsleistungsquelle und des Getriebes miteinander um Leistung von der Antriebsleistungsquelle zu dem Getriebe zu übertragen, und eine gelöste Position zum Trennen der Antriebsleistungsquelle und des Getriebes von einander hat, wobei das Getriebe eine Vielzahl von Vorwärtsantriebspositionen hat, deren Übersetzungsverhältniswerte voneinander unterschiedlich sind, und das automatisch betätigbar ist, um wahlweise eine der Vielzahl der Vorwärtsantriebspositionen gemäß einer Betätigung des Schalthebels zu bilden, wobei die Vielzahl der Vorwärtsantriebspositionen eine Vielzahl von Niedriggeschwindigkeitsantriebspositionen aufweist, die zum Starten des Fahrzeugs geeignet sind, wobei die Vielzahl der Niedriggeschwindigkeitsantriebspositionen wahlweise durch jeweilige Bewegungen des Schalthebels in jeweils unterschiedliche Richtungen gebildet wird,
**dadurch gekennzeichnet, dass** die Vorrichtung folgendes aufweist:
eine Niedriggeschwindigkeitsantriebspositionserfassungsvorrichtung (116, SA2-SA4, 190, 200, 202) zum Erfassen, dass eine der Vielzahl der Niedriggeschwindigkeitsantriebspositionen des Getriebes (16) gegenwärtig ausgewählt ist,
eine Niedriggeschwindigkeitsantriebspositionserfassungsvorrichtung mit (i) einem Lastsensor (200, 202) zum Erfassen einer Richtung, in die eine Betätigungskraft an dem Schalthebel (206) wirkt, und (ii) einer Niedriggeschwindigkeitsantriebspositionsbestimmungseinrichtung (116, SA2-SA4), die als Reaktion auf ein Ausgangssignal des Lastsensors betreibbar ist, um zu bestimmen, welche der Vielzahl der Niedriggeschwindigkeitsantriebspositionen gegenwärtig ausgewählt ist, auf der Grundlage der Richtung, die durch das Ausgangssignal des Lastsensors dargestellt wird.

12. Vorrichtung gemäß Anspruch 11, ferner mit einer Schaltabschlussbestimmungsvorrichtung (117, SB6, 182) zum Bestimmen, dass ein Schaltvorgang des Getriebes (17) zu einer der Vielzahl der Antriebspositionen abgeschlossen ist.

13. Vorrichtung gemäß Anspruch 11 oder 12, wobei die Vielzahl der Niedriggeschwindigkeitsantriebspositionen aus zwei Niedriggeschwindigkeitsantriebspositionen bestehen, die durch jeweilige Bewegungen des Schalthebels (206) in jeweils zwei wechselseitig entgegengesetzte Richtungen entlang einer geraden Linie gebildet werden, und wobei der Lastsensor zwei Lastsensorschalter (200, 202) zum Erfassen der zwei wechselseitig entgegengesetzten Richtungen aufweist, in die die Betätigungskraft an dem Schalthebel wirkt.

14. Vorrichtung gemäß Anspruch 13, wobei die Niedriggeschwindigkeitsantriebspositionsbestimmungsvorrichtung (116, SA2-SA4, 190, 200, 202) eine Neutralpositionserfassungseinrichtung (116, SW11), die als Reaktion auf Ausgangssignale der zwei Lastsensorschalter (200, 202) betreibbar ist, zum Erfassen eines Schaltvorgangs des Getriebes (16) von einer der zwei Niedriggeschwindigkeitsantriebspositionen zu einer neutralen Position des Getriebes aufweist.

## Revendications

1. Appareil destiné à commander un système d'entraînement pour véhicule automobile incluant (a) une source de puissance d'excitation (12), (b) une roue motrice (84), (c) un levier de changement de vitesse (160, 206) manoeuvrable par un conducteur du véhicule, (d) une transmission (16) disposée entre ladite source de puissance d'excitation et ladite roue motrice et ayant un élément d'entrée (42) et un élément de sortie (44), et (e) un embrayage automatique (14) disposé entre ladite transmission et ladite source de puissance d'excitation et ayant une position d'embrayage pour rendre solidaires l'une de l'autre ladite source de puissance d'excitation et ladite transmission afin de transmettre une puissance provenant de ladite source de puissance d'excitation à ladite transmission et une position de débrayage pour déconnecter l'une de l'autre ladite source de puissance d'excitation et ladite transmission, ladite transmission ayant une pluralité de positions de marche avant dont les valeurs de rapport de vitesses sont différentes les unes des autres, et étant mécaniquement manoeuvrable pour établir sélectivement l'une parmi ladite pluralité de positions de marche avant selon une manoeuvre dudit levier de changement de vitesse, ladite pluralité de positions de marche avant incluant une position de commande à basse vitesse appropriée pour démarrer le véhicule, ledit appareil étant **caractérisé en ce qu'**il comprend :
un dispositif de détection de position de commande à basse vitesse (116, S2, 190) destiné à détecter que ladite position de commande à basse vitesse de ladite transmission (16) est actuellement sélectionnée ; et
un dispositif de détermination de position de commande sélectionnée (116, S8) pour déterminer l'une actuellement sélectionnée parmi ladite pluralité des positions de commande avant de ladite transmission, en se basant sur un rapport d'une vitesse de rotation dudit élément d'entrée sur ledit élément de sortie.

2. Appareil selon la revendication 1, comprenant en outre un dispositif d'inhibition d'engagement d'embrayage (116, S2) destiné à empêcher ledit embrayage automatique (14) de se mettre en prise si ledit dispositif de détection de position de commande à basse vitesse ne détecte pas la sélection de ladite position de commande à basse vitesse tandis que le véhicule roule à une vitesse inférieure à un seuil prédéterminé.

3. Appareil selon la revendication 1 ou 2, dans lequel ladite transmission (16) inclut :
deux arbres parallèles (42, 44) servant de dits éléments d'entrée et de sortie, respectivement ;
une pluralité de jeux de pignons de changement de vitesse (46) dont les valeurs de rapport de transmission sont différentes les uns des autres et dont chacun se compose de deux pignons respectivement montés sur lesdits deux arbres parallèles ;
une pluralité d'embrayages de couplage(48) prévus pour ladite pluralité de jeux de pignons de changement de vitesse, respectivement, et incluant des manchons de moyeu d'embrayage respectifs (50) ; et
une pluralité d'éléments de fourchettes (52) engageant lesdits manchons de moyeu d'embrayage, et déplacés mécaniquement sélectivement selon un mouvement dudit levier de changement de vitesse (160) pour déplacer lesdits manchons de moyeu d'embrayage afin d'établir sélectivement ladite pluralité de positions de marche avant de ladite transmission,
et dans lequel ledit dispositif de détection de position de commande à basse vitesse (116, S2, 190) inclut un seul contacteur de détection de MARCHE-ARRET(190) qui est mis en marche et coupé selon un mouvement de l'un de ladite pluralité d'éléments de fourchettes qui correspond à ladite position de commande à basse vitesse.

4. Appareil selon la revendication 3, comprenant en outre un dispositif de détermination d'exécution de changement de vitesse (116, S3, S5, 182) destiné à déterminer qu'une action de changement de vitesse de ladite transmission (16) vers l'une quelconque parmi ladite pluralité des positions de commande avant est réalisée.

5. Appareil selon la revendication 4, dans lequel ledit contacteur de détection de MARCHE-ARRET (190) détecte que ladite position de commande à basse vitesse est actuellement sélectionnée, avant que ledit dispositif de détermination d'exécution de changement de vitesse détermine qu'une dite action de changement de vitesse est réalisée.

6. Appareil selon la revendication 4, dans lequel ledit système de commande inclut en outre un dispositif de commande d'embrayage de déplacement de transmission (116, SS, S6, S9-S12, SB6, SB7, SB10-SB13) destiné à placer ledit embrayage automatique dans une dite position débrayée lors de ladite action de changement de vitesse de ladite transmission, et à placer ledit embrayage automatique dans ladite position de prise après que ledit dispositif de détermination d'exécution de passage des vitesses a déterminé que ladite action de changement de vitesse est réalisée.

7. Appareil selon la revendication 4, dans lequel ladite transmission (16) inclut :
un élément de sélection de position de commande (53) qui est mis en mouvement mécaniquement dans une direction de sélection de position selon un mouvement dudit levier de changement de vitesse commandé par opérateur (160, 206) dans une première direction, pour mettre en prise ledit élément de sélection de position de marche avant avec un sélectionné parmi ladite pluralité d'élément de fourchettes, ledit élément de sélection de position de commande étant mis en mouvement mécaniquement dans une direction de changement de vitesse sensiblement perpendiculaire à ladite direction de sélection de position, selon un mouvement dudit levier de changement de vitesse dans une deuxièmee direction différente de ladite première direction, de manière que l'un sélectionné parmi ladite pluralité d'éléments de fourchettes soit déplacé pour déplacer l'un correspondante des dits manchons de moyeu d'embrayage pour établir une correspondante de ladite pluralité de positions de marche avant de ladite transmission,
et dans lequel ledit dispositif de détermination d'exécution de changement de vitesse (116, S3, S5, SB6, 182) inclut un contacteur de détection de MARCHE-ARRET (182) dont l'état de commande commute entre un état de MARCHE et un état d'ARRET lorsque ledit élément de sélection de position de commande (53) a été déplacé dans ladite direction de changement de vitesse vers une position dans laquelle l'un des dits embrayages de couplage qui correspond à l'un sélectionné parmi ladite pluralité d'éléments de fourchettes a été complètement engagé, quelle que soit une position dudit élément de sélection de position de commande dans ladite direction de sélection de position.

8. Appareil selon la revendication 7, dans lequel ledit élément de sélection de position de commande est un axe du sélecteur de changement de vitesse (53) qui se déplace linéairement dans un sens axial de celui-ci comme ledit sens de sélection de position et qui est mis en rotation sur un axe de celui-ci, un mouvement rotatif dudit axe du sélecteur de changement de vitesse étant un mouvement dudit élément de sélection de position de commande dans ladite direction de changement de vitesse.

9. Appareil selon la revendication 4, dans lequel ladite transmission comprend en outre un élément de sélection de position de commande (53) qui se déplace mécaniquement dans une direction de sélection de position selon un mouvement dudit levier de changement de vitesse commandé par opérateur (160, 206) dans une première direction, pour engager ledit élément de sélection de position de commande avec une sélectionnée de ladite pluralité d'éléments de fourchettes, ledit élément de sélection de position de commande étant mécaniquement déplacé dans une direction de changement de vitesse sensiblement perpendiculaire à ladite direction de sélection de position, selon un mouvement dudit levier de changement de vitesse dans une deuxièmee direction différente de ladite première direction, de manière que l'un dit sélectionné parmi ladite pluralité d'éléments de fourchettes soit déplacé pour déplacer un correspondant des dits manchons de moyeu d'embrayage pour établir une correspondante de ladite pluralité de positions de marche avant de ladite transmission, dans laquelle ledit dispositif de détermination d'exécution de changement de vitesse comprend en outre : un contacteur de détection de MARCHE-ARRET (182) dont l'état de commande est commuté entre un état de MARCHE et un état d'ARRET lorsque ledit élément de sélection de position de commande (53) a été déplacé dans ladite direction de changement de vitesse vers une position dans laquelle l'un des dits embrayages de couplage qui correspond à l'un dit sélectionné parmi ladite pluralité d'éléments de fourchettes a été complètement engagé, quelle que soit la position dudit élément de sélection de position de commande dans ladite direction de sélection de position.

10. Appareil selon la revendication 9, dans lequel ledit appareil de détermination d'exécution de changement de vitesse (116, S3, S5, SB6, 182) comprend en outre un dispositif de commande d'embrayage (116, S3, S5, SB6) manoeuvrable en réponse à un signal de sortie dudit contacteur de détection de MARCHE-ARRET (182), pour déterminer si l'un dit parmi lesdits embrayages de couplage qui correspond à l'un dit sélectionné parmi ladite pluralité d'éléments de fourchettes a été complètement engagé.

11. Appareil de commande d'un système de commande pour véhicule automobile incluant (a) une source de puissance d'excitation (12), (b) une roue motrice (84), (c) un levier de changement de vitesse (206) manoeuvrable par un opérateur du véhicule, (d) une transmission (16) disposée entre ladite source de puissance et ladite roue motrice, et (e) un embrayage automatique (14) disposé entre ladite transmission et ladite source de puissance d'excitation et ayant une position de prise pour connecter l'une à l'autre ladite source de puissance d'excitation et ladite transmission pour transmettre une puissance venant de ladite source de puissance d'excitation à ladite transmission et une position débrayée pour déconnecter l'une de l'autre ladite source de puissance d'excitation et ladite transmission, ladite transmission ayant une pluralité de positions de marche avant dont les valeurs de rapport de transmission sont différentes les unes des autres, et étant mécaniquement manoeuvrables sélectivement pour établir une de ladite pluralité de positions de marche avant selon une manoeuvre dudit levier de changement de vitesse, ladite pluralité des positions de marche avant incluant une pluralité de positions de commande à basse vitesse convenant pour démarrer le véhicule, ladite pluralité de positions de commande à .basse vitesse étant établie sélectivement par mouvements respectifs dudit levier de changement de vitesse dans différentes directions respectives, ledit appareil étant **caractérisé en ce qu'**il comprend :
un dispositif de détection de position de commande à basse vitesse (116, SA2-SA4, 190, 200, 202) destiné à détecter celle d'une pluralité de positions de commande à basse vitesse de ladite transmission (16) qui est actuellement sélectionnée,
ledit dispositif de détection de position de commande à basse vitesse incluant (i) un capteur de charge (200, 202) destiné à détecter une direction dans laquelle une force de commande agit sur ledit levier de changement de vitesse (206), et (ii) un moyen de détermination de position de commande à basse vitesse (116, SA2-SA4) manoeuvrable en réponse à un signal de sortie dudit capteur de charge, pour déterminer laquelle d'une dite pluralité de positions de commande à basse vitesse est actuellement sélectionnée, se basant sur la direction représentée par ledit signal de sortie dudit capteur de charge.

12. Appareil selon la revendication 11, comportant en outre un dispositif de détermination d'exécution de changement de vitesse (117, SB6, 182) destiné à déterminer qu'une action de passage de ladite transmission (11) vers l'une de ladite pluralité des positions de commande est réalisée.

13. Appareil selon la revendication 11 ou 12, dans lequel une dite pluralité de positions de commande à basse vitesse se compose de deux positions de commande à basse vitesse qui sont établies par mouvements respectifs dudit levier de changement de vitesse (206) dans deux directions respectives mutuellement opposées le long d'une ligne droite, et ledit capteur de charge inclut deux capteurs de charge (200, 202) destinés à détecter les deux dites directions mutuellement opposées dans lesquelles ladite force de commande agit sur ledit levier de changement de vitesse.

14. Appareil selon la revendication 13, dans lequel ledit dispositif de détermination de position de commande à basse vitesse (116, SA2-SA4, 190, 200, 202) inclut un moyen de détection de position neutre (116, SB11) manoeuvrable en réponse aux signaux de sortie des dits deux capteurs de charge (240, 202), pour détecter une action de changement de ladite transmission (16) depuis l'une des dites deux positions de commande à basse vitesse vers une position neutre de ladite transmission.
